# EUROPEAN PATENT APPLICATION

(11) **EP 1 284 546 A1**
(43) Date of publication of application: **19.02.2003**
(21) Application number: 01932253.6
(22) Date of filing: 24.05.2001
(51) Int. Cl.: H04B 7/06, H04B 7/10, H04Q 7/30, H01Q 3/26

(54) **ARRAY ANTENNA BASE STATION DEVICE AND RADIO TRANSMISSION METHOD**

(30) Priority: 26.05.2000 JP 2000157477; 19.06.2000 JP 2000183668
(71) Applicant: MATSUSHITA ELECTRIC INDUSTRIAL CO., LTD., Kadoma-shi, Osaka 571-8501 (JP)
(72) Inventor: AOYAMA, Takahisa, Yokosuka-shi, Kanagawa 239-0841 (JP); MIYOSHI, Kenichi, Kanagawa 236-0058 (JP); UE, Toyoki, Yokosuka-shi, Kanagawa 238-0022 (JP)
(74) Representative: Grünecker, August, Dipl.-Ing.
(86) International application number: JP0104371
(87) International publication number: WO01091328

(57) **Abstract**

When the communication terminal for which transmission directivity is generated (that is, communication terminal 116 in the case of transmission directivity generation circuit 110 and communication terminal 117 in the case of transmission directivity generation circuit 111) is a high-speed communication terminal apparatus, transmission directivity generation circuit 110 and transmission directivity generation circuit 111 generate normal transmission directivity (for example, generate transmission directivity in such a way that directivity is directed in the direction of arrival of a signal sent from a communication terminal for which transmission directivity is generated) . On the contrary, when the communication terminal for which transmission directivity is generated is a communication terminal that carries out a general communication, transmission directivity generation circuit 110 and transmission directivity generation circuit 111 generate transmission directivity in such a way that a null is directed in the direction of arrival of a signal sent from the communication terminal which is the high-speed data communication terminal apparatus.

## Description

### Technical Field

The present invention relates to a communication apparatus used in a digital mobile unit communication system based on a CDMA (Code Division Multiple Access) system, and more particularly, to a base station apparatus that carries out high-speed data communications via an array antenna.

### Background Art

In a digital mobile communication system, a method of Adaptive modulation is proposed to realize high-speed data communications in recent years.

However, a conventional CDMA-based digital mobile unit communication system involves problems as described below. These problems will be explained using a case where a base station carries out radio communications with a plurality of communication terminals (here, for example, three communication terminals; first to third communication terminals) as an example. Suppose the base station carries out a high-speed data communication with the first communication terminal, and normal data communications with the second and third communication terminals.

For the first communication terminal to attain required reception quality (e.g., Eb/No), the base station needs to carry out transmission to the first communication terminal with high power. However, in a CDMA-based communication system, the first to third communication terminals are carrying out communications with the base station using a same frequency band.

Therefore, if the base station carries out transmission to the first communication terminal with high power, the second and the third communication terminals will receive considerable interference from the signal sent from the base station to the first communication terminal. That is, the signals sent from the base station to the second and third communication terminals receive considerable interference from the signal sent from the base station to the first communication terminal. As a result, the reception quality at the second and third communication terminals deteriorates.

Thus, the conventional CDMA-based digital mobile unit communication system involves a problem that the base station carrying out high-speed data communication with a predetermined communication terminal causes considerable interference with communication terminals other than this communication terminal.

### Disclosure of Invention

It is an object of the present invention to provide an array antenna base station apparatus that will carry out high-speed data communications while suppressing interference with communication terminal apparatuses.

To attain the object above, the present invention generates transmission directivities for general communication terminals in such a way that nulls are directed in the direction of arrival of a signal sent from a high-speed communication terminal.

### Brief Description of Drawings

FIG.1 is a block diagram showing a configuration of an array antenna base station apparatus according to Embodiment 1 of the present invention;
FIG.2 is a schematic view showing an example of transmission directivity of a communication terminal generated by a transmission directivity generation circuit in an array antenna base station apparatus according to Embodiment 1 of the present invention;
FIG.3 is a block diagram showing a configuration of an array antenna base station apparatus according to Embodiment 2 of the present invention;
FIG.4A is a schematic view showing an example of transmission directivity of a communication terminal generated by a transmission directivity generation circuit in the array antenna base station apparatus according to Embodiment 2 of the present invention;
FIG.4B is a schematic view showing an example of transmission directivity of a communication terminal shifted by a shift amount calculation circuit in the array antenna base station apparatus according to Embodiment 2 of the present invention;
FIG.4C is a schematic view showing a second example of transmission directivity of the communication terminal shifted by the shift amount calculation circuit in the array antenna base station apparatus according to Embodiment 2 of the present invention;
FIG.5 is a block diagram showing a configuration of an array antenna base station apparatus according to Embodiment 3 of the present invention;
FIG.6 is a schematic view showing a first example of transmission directivity of a high-speed data communication terminal generated by a transmission directivity generation circuit in the array antenna base station apparatus according to Embodiment 3 of the present invention;
FIG.7 is a schematic view showing a second example of transmission directivity of the high-speed data communication terminal generated by the transmission directivity generation circuit in the array antenna base station apparatus according to Embodiment 3 of the present invention;
FIG.8 is a schematic view showing a third example of transmission directivity of the high-speed data communication terminal generated by the transmission directivity generation circuit in the array antenna base station apparatus according to Embodiment 3 of the present invention;
FIG.9 is a block diagram showing a configuration of an array antenna base station apparatus according to Embodiment 4 of the present invention;
FIG.10A is a schematic view showing a first example of directivity of a communication terminal;
FIG. 10B is a schematic view showing a second example of directivity of a communication terminal;
FIG.11 is a block diagram showing a configuration of an array antenna base station apparatus according to Embodiment 5 of the present invention;
FIG.12A is a schematic view showing a first example of transmission directivity of a general communication terminal;
FIG. 12B is a schematic view showing a second example of transmission directivity of a general communication terminal;
FIG.13 is a block diagram showing a configuration of an array antenna base station apparatus according to Embodiment 6 of the present invention;
FIG.14 is a schematic view showing an example of transmission directivity of a general communication terminal generated by a transmission directivity generation circuit in the array antenna base station apparatus according to Embodiment 6 of the present invention;
FIG.15 is a block diagram showing a configuration of an array antenna base station apparatus according to Embodiment 7 of the present invention;
FIG.16 is a schematic view showing an example of positions of communication terminals carrying out radio communications with the array antenna base station apparatus according to Embodiment 7 of the present invention;
FIG.17 is a schematic view showing an example of results of scheduling by the array antenna base station apparatus according to Embodiment 8 of the present invention;
FIG.18 is a block diagram showing a configuration of a communication terminal apparatus carrying out a radio communication with the array antenna base station apparatus according to Embodiment 8 of the present invention;
FIG.19 is a block diagram showing a configuration of the array antenna base station apparatus according to Embodiment 8 of the present invention;
FIG.20 is a block diagram showing a configuration of an array antenna base station apparatus according to Embodiment 9 of the present invention;
FIG.21A is a schematic view showing an example of transmission directivity generated by the array antenna base station apparatus according to Embodiment 9 of the present invention;
FIG.21B is a schematic view showing an example of transmission directivity generated by the array antenna base station apparatus according to Embodiment 9 of the present invention;
FIG.22 is a block diagram showing a configuration of an array antenna base station apparatus according to Embodiment 10 of the present invention;
FIG.23 is a block diagram showing a configuration of an array antenna base station apparatus according to Embodiment 11 of the present invention; and
FIG.24 is a schematic view showing an example of transmission directivity generated by the array antenna base station apparatus according to Embodiment 11 of the present invention.

### Best Mode for Carrying out the Invention

With reference now to the attached drawings, embodiments of the present invention will be explained in detail below. In the following embodiments, a communication terminal that carries out high-speed data communication (communication carried out at high information transmission speed) will be explained as a "W-CDMA-based communication terminal using DSCH", but it is also possible to regard the communication terminal that carries out high-speed data communication as a "W-CDMA-based communication terminal using DPCH" and "communication terminal carrying out high-speed packet transmission". Furthermore, the "direction of arrival of a signal sent from a communication terminal" will be abbreviated as "direction of arrival of a communication terminal".

### (Embodiment 1)

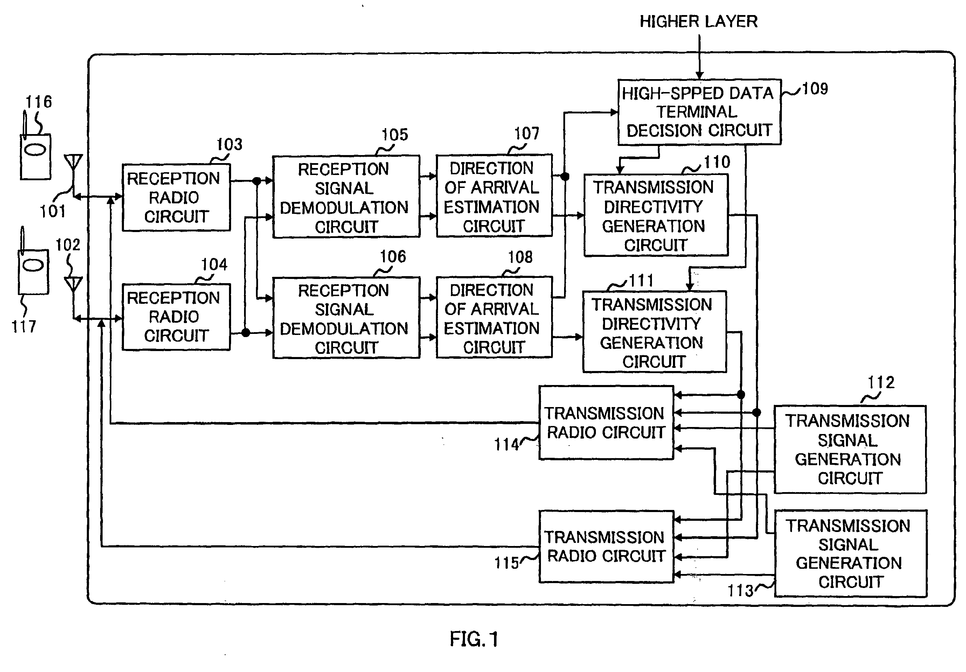

FIG.1 is a block diagram showing a configuration of an array antenna base station apparatus according to Embodiment 1 of the present invention. This embodiment will describe a case where the base station carries out radio communications with two communication terminals; communication terminal 116 and communication terminal 117 as an example.

In FIG. 1, reception radio circuit 103 and reception radio circuit 104 convert signals received by antenna 101 and antenna 102 (reception signals) to baseband signals respectively.

Reception signal demodulation circuit 105 and reception signal demodulation circuit 106 generate demodulated signals by carrying out demodulation processing such as despreading using the baseband signals from reception radio circuit 103 and reception radio circuit 104 respectively.

Direction of arrival estimation circuit 107 estimates the direction of arrival of communication terminal 116 using the demodulated signal from reception signal demodulation circuit 105 and sends the estimated direction of arrival to high-speed data terminal decision circuit 109.

Direction of arrival estimation circuit 108 estimates the direction of arrival of communication terminal 117 using the demodulated signal from reception signal demodulation circuit 106 and sends the estimated direction of arrival to high-speed data terminal decision circuit 109.

High-speed data terminal decision circuit 109 recognizes which of the two communication terminals carries out a high-speed data communication using information on communication terminals carrying out high-speed data communications (that is, information on which communication terminal carries out high-speed data communications) from a higher layer and information on the direction of arrival from direction of arrival estimation circuit 107 and direction of arrival estimation circuit 108. This high-speed data terminal decision circuit 109 sends the recognition result to transmission directivity generation circuit 110 and transmission directivity generation circuit 111. Moreover, it is also possible for high-speed data terminal decision circuit 109 to independently decide the high-speed data terminal to be used based on the information from each communication terminal without using the information of the higher layer.

Transmission directivity generation circuit 110 and transmission directivity generation circuit 111 generate transmission directivities for communication terminal 116 and communication terminal 117 respectively based on the recognition result from high-speed data terminal decision circuit 109. The method of generating transmission directivities will be described in detail later. These transmission directivity generation circuit 110 and transmission directivity generation circuit 111 output the transmission directivities generated to transmission radio circuit 114 and transmission radio circuit 115.

Transmission signal generation circuit 112 and transmission signal generation circuit 113 generate transmission signals for communication terminal 116 and communication terminal 117 respectively. These transmission signal generation circuit 112 and transmission signal generation circuit 113 send the transmission signals generated to transmission radio circuit 114 and transmission radio circuit 115.

Transmission radio circuit 114 and transmission radio circuit 115 multiply the transmission signals for communication terminal 116 and communication terminal 117 by the transmission directivities of communication terminal 116 and communication terminal 117 respectively and convert the transmission signals (baseband signals) resulting from these multiplications to RF-band signals and send these RF-band signals via antenna 101 and antenna 102 respectively.

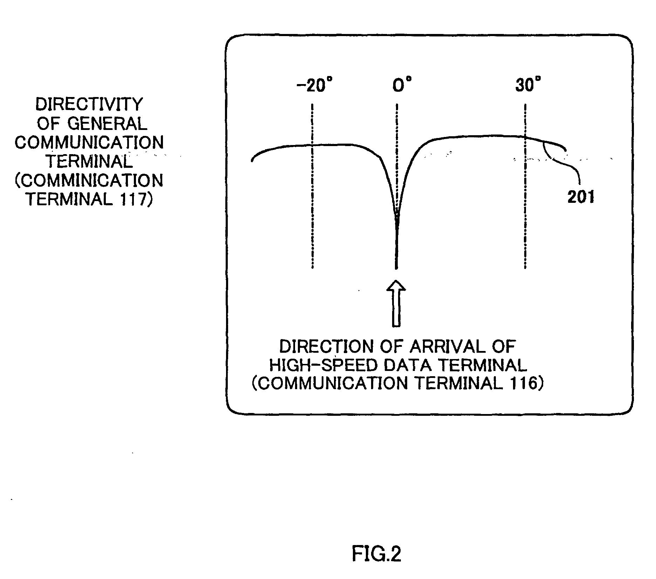

Then, an operation of the array antenna base station apparatus in the above configuration will be explained with reference to FIG.2. FIG.2 is a schematic view showing an example of transmission directivity of communication terminal 117 generated by transmission directivity generation circuit 111 in the array antenna base station apparatus according to Embodiment 1 of the present invention.

Here, suppose that communication terminal 116 carries out a high-speed data communication, while communication terminal 117 carries out a general communication.

Direction of arrival estimation circuit 107 and direction of arrival estimation circuit 108 estimate the direction of arrival of communication terminal 116 and the direction of arrival of communication terminal 117 respectively. The direction of arrival of communication terminal 116 estimated by direction of arrival estimation circuit 107 is sent to high-speed data terminal decision circuit 109 and transmission directivity generation circuit 110. The direction of arrival of communication terminal 117 estimated by direction of arrival estimation circuit 108 is sent to high-speed data terminal decision circuit 109 and transmission directivity generation circuit 111.

High-speed data terminal decision circuit 109 recognizes which of communication terminal 116 and communication terminal 117 is the communication terminal carrying out a high-speed data communication (hereinafter referred to as "high-speed data communication terminal") based on the information on communication terminals carrying out high-speed data communications from the higher layer, the direction of arrival of communication terminal 116 from direction of arrival estimation circuit 107 and the direction of arrival of communication terminal 117 from direction of arrival estimation circuit 108. The recognition result is sent to transmission directivity generation circuit 110 and transmission directivity generation circuit 111. It is obvious that it is also possible for high-speed data terminal decision circuit 109 to independently decide the high-speed data terminal to be used based on the information from each communication terminal without using the information of the higher layer.

Transmission directivity generation circuit 110 and transmission directivity generation circuit 111 generate transmission directivities for communication terminal 116 and communication terminal 117 respectively based on the recognition result from high-speed data terminal decision circuit 109. More specifically, when the communication terminal for which transmission directivity is generated (that is, communication terminal 116 for transmission directivity generation circuit 110 and communication terminal 117 for transmission directivity generation circuit 111) is a high-speed data communication terminal, transmission directivity generation circuit 110 and transmission directivity generation circuit 111 generate normal transmission directivities. Here, generation of normal transmission directivity is equivalent to generation of transmission directivity in such a way as to direct the directivity in the direction of arrival of a communication terminal for which transmission directivity is generated. Here, since communication terminal 116 is the high-speed data communication terminal, transmission directivity generation circuit 110 generates normal transmission directivity.

On the contrary, when the communication terminal for which transmission directivity is generated is a communication terminal carrying out general communications (hereinafter referred to as "general communication terminal"), transmission directivity generation circuit 110 and transmission directivity generation circuit 111 generate special transmission directivities. Here, since communication terminal 117 is the general communication terminal, transmission directivity generation circuit 111 generates special transmission directivity. That is, as shown in FIG.2, transmission directivity 201 of communication terminal 117, which is the general communication terminal, is generated so as to direct a null toward the direction of arrival of communication terminal 116, which is the high-speed data communication terminal. Here, it goes without saying that transmission directivity 201 for communication terminal 117 is directed in the direction of arrival of communication terminal 117.

By the way, the method of directing a null in a specific direction includes, for example, a DCMP method, which uses information on the direction of a desired signal and information on the direction of an interference signal, but the method is not particularly limited to this.

This drastically suppresses power of the transmission signal of communication terminal 117 in the direction of arrival of communication terminal 116. As a result, communication terminal 116 receives almost no interference from the signal sent from the base station to communication terminal 117. That is, the signal sent from the base station to communication terminal 116 receives almost no interference from the signal sent from the base station to communication terminal 117. Thus, communication terminal 116 can receive a signal sent from the base station with interference suppressed. Therefore, even if the base station carries out transmission to communication terminal 116 with smaller power, communication terminal 116 can acquire required reception quality. Since the base station carries out transmission to communication terminal 116 with smaller power, the base station can also suppress interference with communication terminal 117.

According to FIG.1 again, the transmission directivities generated by transmission directivity generation circuit 110 and transmission directivity generation circuit 111 are sent to transmission radio circuit 114 and transmission radio circuit 115.

Transmission radio circuit 114 and transmission radio circuit 115 multiply the transmission signals for communication terminal 116 and communication terminal 117 by the transmission directivities for communication terminal 116 and communication terminal 117 respectively and convert the transmission signals (baseband signals) resulting from these multiplications to RF-band signals and send these RF-band signals via antenna 101 and antenna 102 respectively.

Thus, this embodiment sends a transmission signal with a transmission directivity in such a way as to direct a null in the direction of arrival of a high-speed data communication terminal to a general communication terminal and can thereby suppress interference with the high-speed data communication terminal, making it possible to carry out transmission to the high-speed data communication terminal with further suppressed power while maintaining the reception quality at the high-speed data communication terminal and carry out even faster data communication to the high-speed data communication terminal. This embodiment can thereby suppress interference with the general communication terminal.

### (Embodiment 2)

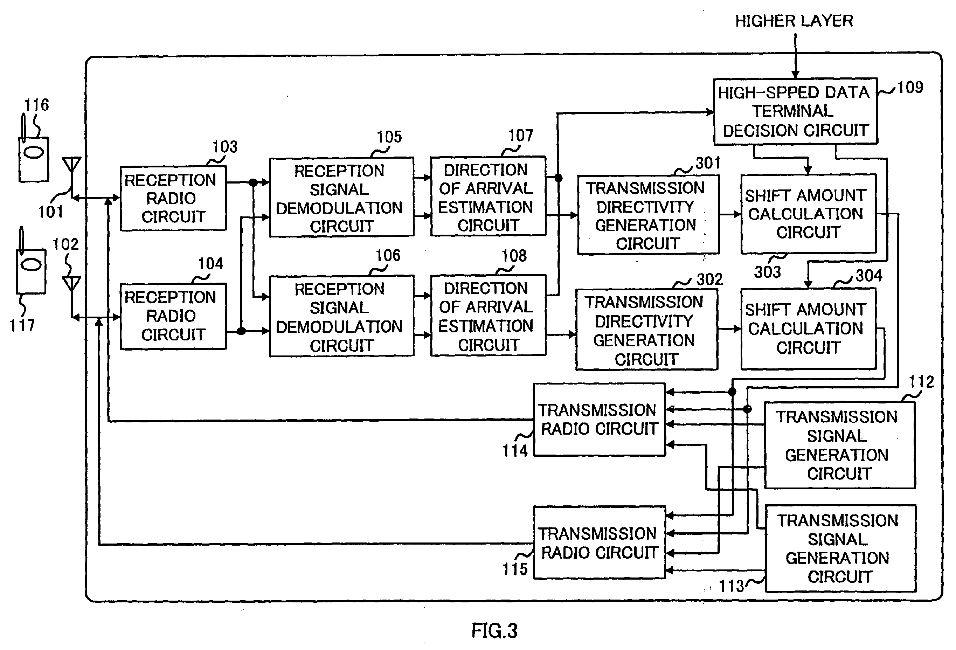

This embodiment will describe a case where a transmission directivity of a general communication terminal is shifted in such a way as to direct a null point in the direction of arrival of a high-speed data communication terminal. The array antenna base station apparatus according to this embodiment will be explained with reference to FIG.3.

FIG.3 is a block diagram showing a configuration of the array antenna base station apparatus according to Embodiment 2 of the present invention. The same components in FIG.3 as those of Embodiment 1 (FIG.1) are assigned the same reference numerals as those in FIG.1 and detailed explanations thereof are omitted.

In FIG.3, transmission directivity generation circuit 301 and transmission directivity generation circuit 302 generate transmission directivities for communication terminal 116 and communication terminal 117 respectively. Transmission directivity generation circuit 301 and transmission directivity generation circuit 302 generate normal transmission directivities as explained in Embodiment 1.

Shift amount calculation circuit 303 and shift amount calculation circuit 304 shift the transmission directivities generated by transmission directivity generation circuit 301 and transmission directivity generation circuit 302 respectively based on the recognition result from high-speed data terminal decision circuit 109. The respective transmission directivity generation circuits send the shifted transmission directivities to transmission radio circuit 114 and transmission radio circuit 115 respectively.

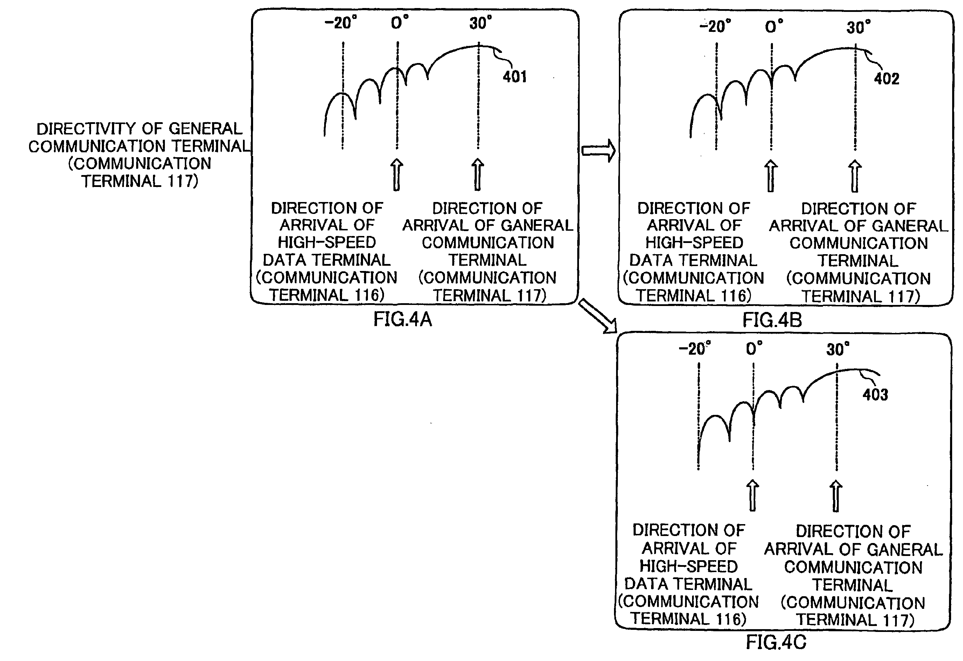

Then, an operation of the array antenna base station apparatus in the above configuration will be explained with reference to FIG.4A to FIG.4C. As in the case of Embodiment 1, suppose communication terminal 116 carries out a high-speed data communication, while communication terminal 117 carries out a general communication.

FIG.4A is a schematic view showing an example of transmission directivity of communication terminal 117 generated by transmission directivity generation circuit 302 in the array antenna base station apparatus according to Embodiment 2 of the present invention. FIG.4B is a schematic view showing a first example of transmission directivity of communication terminal 117 shifted by shift amount calculation circuit 304 in the array antenna base station apparatus according to Embodiment 2 of the present invention. FIG.4C is a schematic view showing a second example of transmission directivity of communication terminal 117 shifted by shift amount calculation circuit 304 in the array antenna base station apparatus according to Embodiment 2 of the present invention.

Transmission directivity generation circuit 301 and transmission directivity generation circuit 302 generate transmission directivities for communication terminal 116 and communication terminal 117 respectively. That is, transmission directivity generation circuit 301 and transmission directivity generation circuit 302 generate such transmission directivities that direct beams in the directions of arrival of communication terminal 116 and communication terminal 117 respectively. The transmission directivities generated by transmission directivity generation circuit 301 and transmission directivity generation circuit 302 are sent to shift amount calculation circuit 303 and shift amount calculation circuit 304 respectively.

Shift amount calculation circuit 303 and shift amount calculation circuit 304 carry out shifts for the transmission directivities for communication terminal 116 and communication terminal 117 based on the recognition result from high-speed data terminal decision circuit 109. More specifically, when the communication terminal to be shifted (that is, communication terminal 116 for shift amount calculation circuit 303 and communication terminal 117 for shift amount calculation circuit 304) is a high-speed data communication terminal, shift amount calculation circuit 303 and shift amount calculation circuit 304 do not carry out shifts for transmission directivities.

On the contrary, when the communication terminal to be shifted is a general communication terminal, shift amount calculation circuit 303 and shift amount calculation circuit 304 carry out shifts for transmission directivities. Here, since communication terminal 117 is the general communication terminal, shift amount calculation circuit 304 carries out a shift for transmission directivities. More specifically, as shown in FIG.4A, transmission directivity 401 for communication terminal 117 generated by transmission directivity generation circuit 302 indicates that transmission to communication terminal 116 is carried out with strong power. Therefore, shift amount calculation circuit 304 shifts the transmission directivity of communication terminal 117 in such a way that a null point is directed in the direction of arrival of communication terminal 116 (in such a way that the null point virtually matches the direction of arrival of communication terminal 116) as shown in FIG.4B and 4C. In this way, transmission directivity 402 or 403 for communication terminal 117 after the shift is generated.

As shown above, this embodiment shifts transmission directivities in such a way that a null point is directed in the direction of arrival of a high-speed data communication terminal and transmits the transmission signal for which the shifted transmission directivity is formed to a general communication terminal, and can thereby suppress interference with the high-speed data communication terminal, making it possible to carry out transmission to the high-speed data communication terminal with power further suppressed and carry out faster data communication with the high-speed data communication terminal. This reduces interference with the general communication terminal.

### (Embodiment 3)

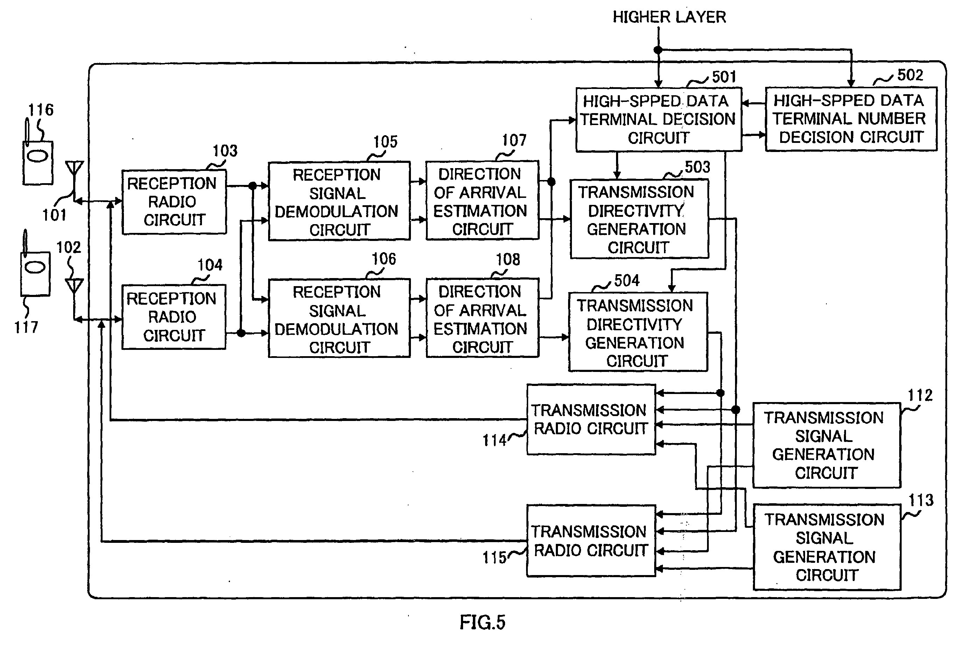

This embodiment will describe a case where there is a plurality of high-speed data communication terminals. The array antenna base station apparatus according to Embodiment 3 will be explained with reference to FIG.5 below. FIG.5 is a block diagram showing a configuration of the array antenna base station apparatus according to Embodiment 3 of the present invention. The same components in FIG.5 as those of Embodiment 1 (FIG.1) are assigned the same reference numerals as those in FIG.1 and detailed explanations thereof are omitted.

In FIG.5, high-speed data terminal number decision circuit 502 detects the number of high-speed data communication terminals using information on high-speed data communication terminals from a higher layer and sends the detection result to high-speed data terminal direction decision circuit 501. When high-speed data terminal direction decision circuit 501 independently decides the high-speed data terminal to be used based on the information from each communication terminal without using the information of the higher layer, high-speed data terminal number decision circuit 502 detects the number of high-speed data communication terminals using information from high-speed data terminal direction decision circuit 501.

High-speed data terminal direction decision section 501 recognizes which of the two communication terminals is the high-speed data communication terminal using the information on high-speed data communication terminals from the higher layer and the detection result from high-speed data terminal number decision circuit 502 and sends the recognition result to transmission directivity generation circuit 503 and transmission directivity generation circuit 504. Furthermore, when the number of the high-speed data communication terminals is 2, high-speed data terminal direction decision circuit 501 compares a difference in the direction of arrival between the communication terminals with a threshold using the directions of arrival from direction of arrival estimation circuit 107 and direction of arrival estimation circuit 108 and sends the comparison result to transmission directivity generation circuit 503 and transmission directivity generation circuit 504. There will be no problem even if high-speed data terminal direction decision circuit 501 independently decides the high-speed data terminal to be used based on the information from each communication terminal without using the information from the higher layer.

Transmission directivity generation circuit 503 and transmission directivity generation circuit 504 generate transmission directivities for communication terminal 116 and communication terminal 117 respectively based on the recognition result and comparison result from high-speed data terminal direction decision circuit 501. The method of generating transmission directivities will be described in detail later.

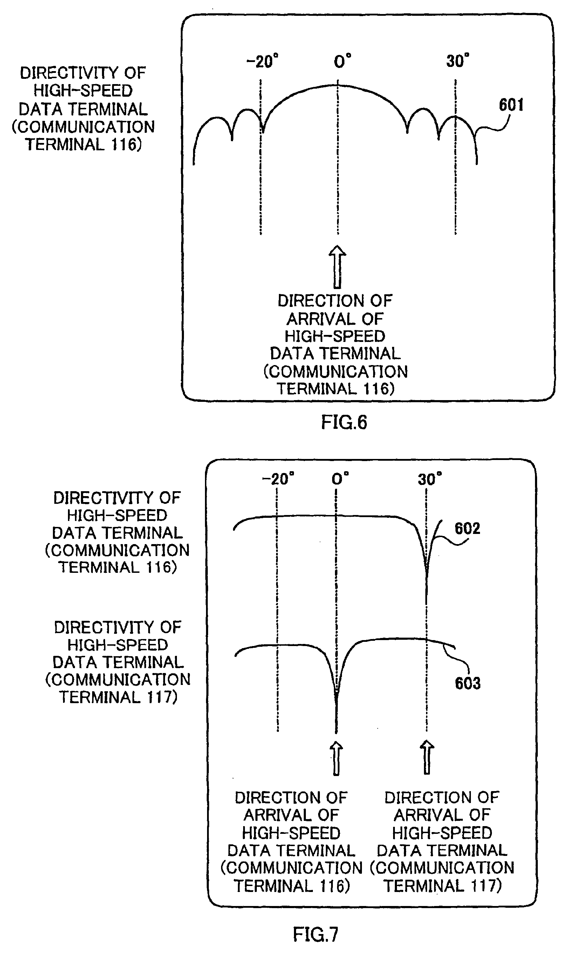

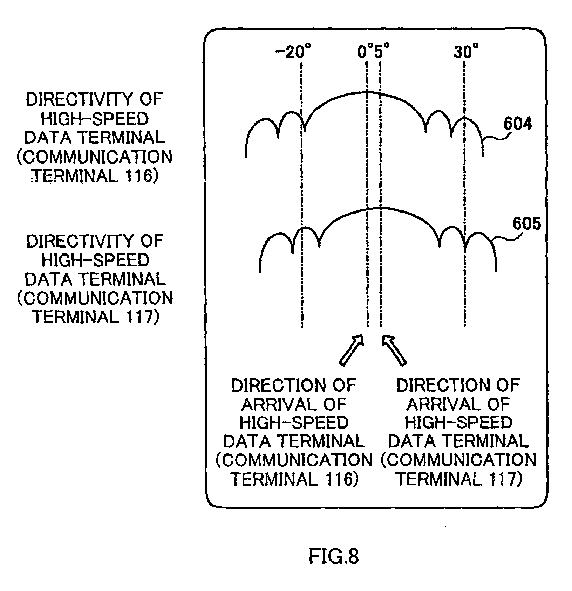

Then, an operation of the array antenna base station apparatus in the above configuration will be explained using FIG.6 to FIG.8. FIG.6 is a schematic view showing a first example of transmission directivity of a high-speed data communication terminal generated by the transmission directivity generation circuit in the array antenna base station apparatus according to Embodiment 3 of the present invention. FIG.7 is a schematic view showing a second example of transmission directivity of the high-speed data communication terminal generated by the transmission directivity generation circuit in the array antenna base station apparatus according to Embodiment 3 of the present invention. FIG.8 is a schematic view showing a third example of transmission directivity of the high-speed data communication terminal generated by the transmission directivity generation circuit in the array antenna base station apparatus according to Embodiment 3 of the present invention.

Transmission directivity generation circuit 503 and transmission directivity generation circuit 504 generate transmission directivities for communication terminal 116 and communication terminal 117 respectively based on the recognition result and comparison result from high-speed data terminal direction decision circuit 501.

First, when communication terminal 116 and communication terminal 117 are a high-speed data communication terminal and a general communication terminal respectively, transmission directivity generation circuit 504 generates the special transmission directivities explained in Embodiment 1. In this way, the transmission directivity of communication terminal 117 is generated. As shown in FIG.6, transmission directivity generation circuit 503 generates transmission directivity 601 in such a way that the beam is directed in the direction of arrival of communication terminal 116. In this way, the transmission directivity of communication terminal 116 is generated.

Second, when both communication terminal 116 and communication terminal 117 are high-speed data communication terminals and the difference in the direction of arrival of the respective communication terminals exceeds a threshold, transmission directivity generation circuit 503 generates transmission directivity 602 in such a way that a null point is directed in the direction of arrival of communication terminal 117 as shown in FIG.7. In this way, the transmission directivity of communication terminal 116 is generated. Transmission directivity generation circuit 504 generates transmission directivity 603 in such a way that the null point is directed in the direction of arrival of communication terminal 116 as shown in FIG.7.

As a result of generating these transmission directivities, the power in the direction of arrival of communication terminal 117 (116) is drastically suppressed in the transmission signal of communication terminal 116 (117). As a result, communication terminal 117 (116) receives almost no interference from the signal sent from the base station to communication terminal 116 (117).

Therefore, even if the base station carries out transmission to communication terminal 117 (116) with smaller power, communication terminal 117 (116) can obtain required reception quality. This allows the base station to carry out transmission to communication terminal 117 (116) with smaller power, and can thereby suppress interference with communication terminal 117 (116), too.

Third, when both communication terminal 116 and communication terminal 117 are high-speed data communication terminals and the difference in the direction of arrival between the communication terminals is equal to or less than a threshold, transmission directivity generation circuit 503 generates transmission directivity 604 in such a way that the beam is directed in the direction of arrival of communication terminal 116 as shown in FIG.8. In this way, the transmission directivity of communication terminal 116 is generated. Transmission directivity generation circuit 504 generates transmission directivity 605 in such a way that the beam is directed in the direction of arrival of communication terminal 117. It is preferred that transmission directivity generation circuit 503 and transmission directivity generation circuit 504 generate transmission directivities in such a way that power reaches a maximum in the directions of arrival of communication terminal 116 and communication terminal 117 respectively.

This embodiment has described the case where there are two high-speed data communication terminals, but the present invention is also applicable to a case where there are three or more high-speed data communication terminals. That is, in the case where there are three or more high-speed data communication terminals, for a set of high-speed data communication terminals when differences in the direction of arrival from one another are equal to or smaller than a threshold, it is possible to generate transmission directivities in such a way that the beam is directed in the direction of arrival of this set, and for high-speed data communication terminals when differences in the direction of arrival from one another are exceeds a threshold, it is possible to generate transmission directivities in such a way that a null point is directed in the direction of arrival of high-speed data communication terminals other than the own terminal. In this way, in the case where there is a plurality of high-speed data communication terminals, it is possible to generate transmission directivities for the respective high-speed data communication terminals based on the distance of the direction of arrival between the high-speed data communication terminals (that is, density of high-speed data communication terminals).

Thus, according to this embodiment, when there is a plurality of high-speed data communication terminals and the difference in the direction of arrival between the respective high-speed data communication terminals exceeds a threshold, it is possible to send a transmission signal with transmission directivities formed in such a way that a null is directed in the direction of arrival of other high-speed data communication terminals and thereby suppress interference with the high-speed data communication terminals, thus making it possible to carry out transmission to the high-speed data communication terminals with power further suppressed while maintaining the reception quality of each high-speed data communication terminal and perform faster data transmission to each high-speed data communication terminal. This embodiment can thus suppress interference with each high-speed data communication terminal.

### (Embodiment 4)

This embodiment will describe a case where the modulation level of a modulation system in a transmission signal of a high-speed data communication terminal is changed according to the amount of reduction of interference.

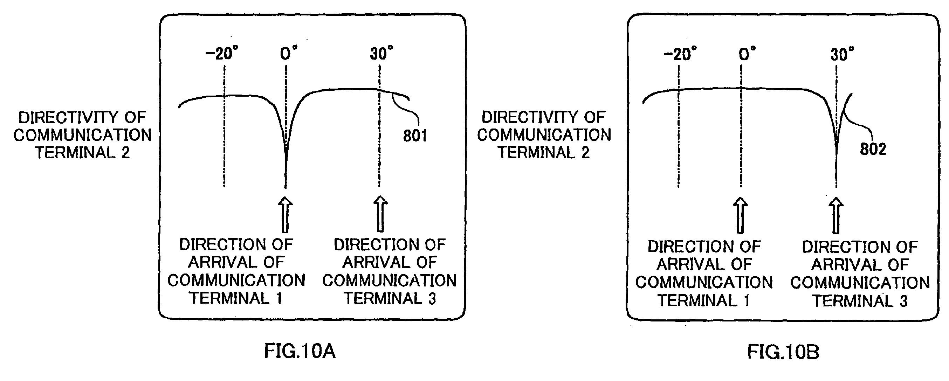

In above-described Embodiment 1 and Embodiment 2, the adaptive modulation system in a transmission signal of communication terminal 116 (high-speed data communication terminal) is set before the influence of interference with communication terminal 116 from the transmission signal of communication terminal 117 is reduced. Therefore, the adaptive modulation system that can actually be set in the transmission signal of communication terminal 116 has high modulation level compared to the point in time at which the adaptive modulation system is set. A specific example will be explained with reference to FIG.10A and 10B.

FIG.10A is a schematic view showing a first example of directivity of a communication terminal. FIG.10B is a schematic view showing a second example of directivity of a communication terminal.

Here, a case where there are three communication terminals communicating with the base station apparatus, two of which carry out high-speed data communications will be explained as an example. However, suppose a high-speed data communication is allowed for only one communication terminal at a time.

FIG.10A shows transmission directivity 801 of communication terminal 2 when one communication terminal (suppose communication terminal 1) is carrying out a high-speed data communication and another communication terminal (suppose communication terminal 2) is carrying out a normal communication terminal. In this condition, the other communication terminal carrying out high-speed data communication (suppose communication terminal 3) determines a modulation level of the modulation system based on the reception condition.

However, when communication terminal 3 actually carries out high-speed data communication, directivity 802 of communication terminal 2 is as shown in FIG.10B. That is, the interference that communication terminal 3 receives from the transmission signal of communication terminal 2 is reduced. As a result, even if transmission is performed to communication terminal 3 with smaller power or transmission is performed using a modulation system with a higher modulation level with the same power, the reception quality of communication terminal 3 is good. That is, it is possible to carry out transmission to communication terminal 3 using a higher modulation level than the modulation level determined in FIG.10A.

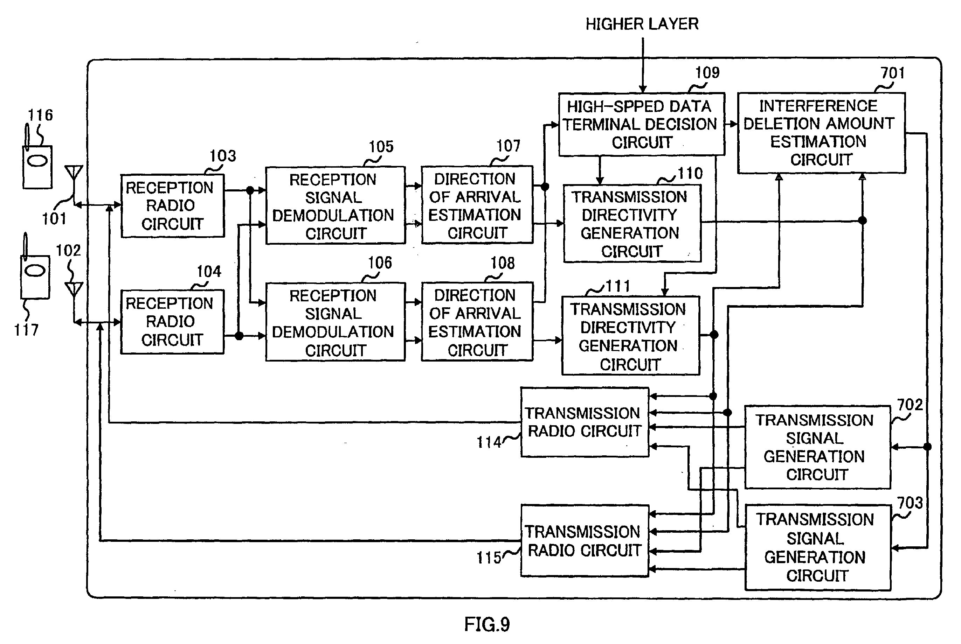

Thus, this embodiment changes the modulation level of the modulation system in the transmission signal of a high-speed data communication terminal according to the amount of reduction of interference. The array antenna base station apparatus according to this embodiment will be explained with reference to FIG.9. FIG.9 is a block diagram showing a configuration of the array antenna base station apparatus according to Embodiment 4 of the present invention. The same components in FIG.9 as those of Embodiment 1 (FIG.1) are assigned the same reference numerals as those in FIG.1 and detailed explanations thereof are omitted. As in the case of Embodiment 1, suppose communication terminal 116 is a high-speed data communication terminal, while communication terminal 117 is a general communication terminal.

In FIG.9, interference reduction amount estimation circuit 701 estimates the amount of interference with communication terminal 116 from the transmission signal of communication terminal 117 which can be suppressed using the transmission directivity of communication terminal 116 from transmission directivity generation circuit 110 and the transmission directivity of communication terminal 117 from transmission directivity generation circuit 111. Furthermore, interference reduction amount estimation circuit 701 notifies transmission signal generation circuit 702 and transmission signal generation circuit 703 of the modulation level of the transmission signals of communication terminal 116 and communication terminal 117.

Transmission signal generation circuit 702 and transmission signal generation circuit 703 generate transmission signals for communication terminal 116 and communication terminal 117 respectively based on the notification from interference reduction amount estimation circuit 701.

Thus, according to this embodiment, by changing the modulation level of the modulation system in a transmission signal of a high-speed data communication terminal according to the amount of reduction of interference, it is possible to carry out an optimal high-speed data communication with the above-described high-speed data communication terminal without increasing interference with other communication terminals.

### (Embodiment 5)

This embodiment will describe a case where transmit power of a communication terminal is determined using transmission directivity of the communication terminal generated.

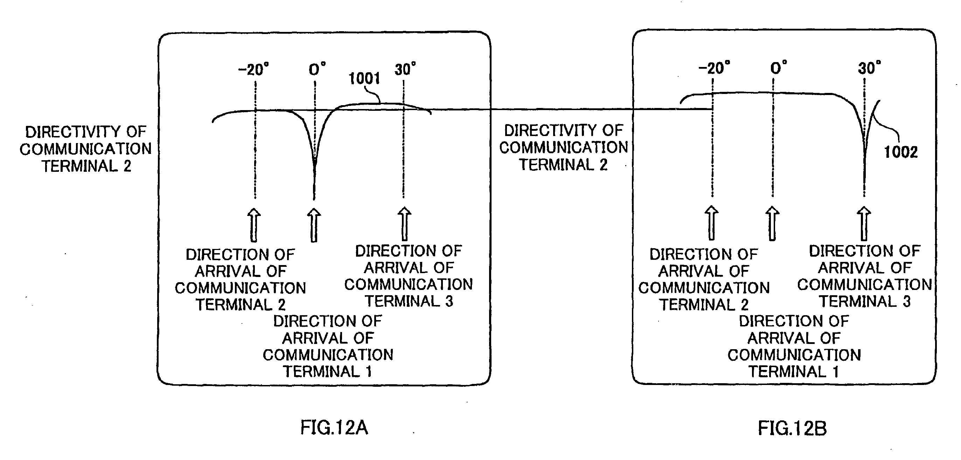

Once a transmission directivity is generated as explained in Embodiment 1 and Embodiment 2, the reception condition of a communication terminal (general communication terminal) other than a high-speed data communication terminal changes constantly, which may make the operation of transmit power control (power control) by the base station apparatus unstable. A specific example will be explained with reference to FIG.12A and FIG.12B.

FIG.12A is a schematic view showing a first example of transmission directivity of a general communication terminal. FIG.12B is a schematic view showing a second example of transmission directivity of a general communication terminal.

Here, a case where there are three communication terminals communicating with the base station apparatus, two of which carry out high-speed data communications will be explained as an example. However, suppose a high-speed data communication is allowed for only one communication terminal at a time. However, in reality, a plurality of communication terminals can perform high-speed data communications simultaneously.

First, FIG.12A shows transmission directivity 1001 of communication terminal 2 when one communication terminal (suppose communication terminal 1) is carrying out a high-speed data communication and another communication terminal (suppose communication terminal 2) is carrying out a normal communication terminal. Transmission directivity 1001 of communication terminal 2 in this condition is generated in such a way that a null point is directed in the direction of arrival of communication terminal 1. Then, in the case where the other communication terminal (suppose communication terminal 3) carries out high-speed data communication, transmission directivity 1002 of communication terminal 2 is generated in such a way that a null point is directed in the direction of arrival of communication terminal 3 as shown in FIG.12B. As is apparent from a comparison between FIG. 12A and FIG. 12B, the transmission directivity of communication terminal 2 has been changed drastically, which may change transmit power in the direction of arrival of communication terminal 2 drastically.

Thus, this embodiment estimates power in the direction of arrival of a communication terminal successively using a transmission directivity generated of the communication terminal and determines transmit power of the communication terminal so that the power in the direction of arrival of the communication terminal is constant.

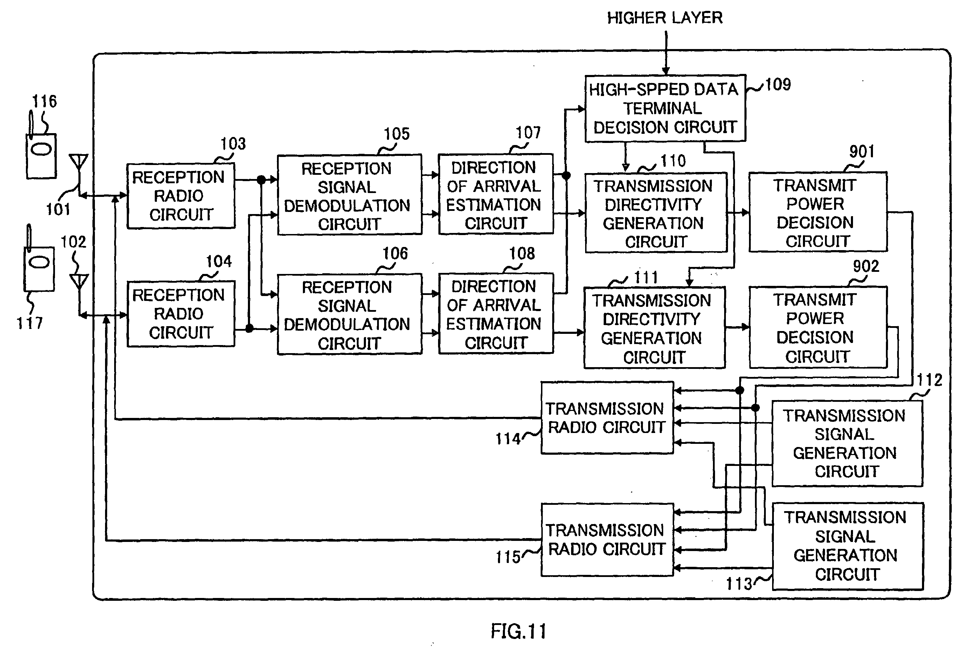

The array antenna base station apparatus according to this embodiment will be explained with reference to FIG.11. FIG. 11 is a block diagram showing a configuration of the array antenna base station apparatus according to Embodiment 5 of the present invention. The same components in FIG.11 as those of Embodiment 1 (FIG.1) are assigned the same reference numerals as those in FIG.1 and detailed explanations thereof are omitted.

In FIG.11, transmit power determining circuit 901 (transmit power determining circuit 902) estimates power in the direction of arrival of communication terminal 116 (communication terminal 117) using the transmission directivity of communication terminal 116 (communication terminal 117) from transmission directivity generation circuit 110 (transmission directivity generation circuit 111) and determines transmit power of communication terminal 116 (communication terminal 117) so that the power in the direction of arrival of communication terminal 116 (communication terminal 117) is constant based on the estimation result. Transmission power determining circuit 901 (transmission power determining circuit 902) notifies the transmit power of the transmission signal of communication terminal 116 (communication terminal 117) to transmission radio circuit 114 and transmission radio circuit 115 based on the decision result.

Thus, according to this embodiment, it is possible to stabilize control over transmit power to communication terminals by setting transmit power of transmission signals of communication terminals using transmission directivities generated of the communication terminals so that power in the direction of arrival of the communication terminals is constant.

### (Embodiment 6)

This embodiment will describe a case where transmission directivities of general communication terminals are generated in such a way that a null point is directed not only toward a communication terminal actually carrying out a high-speed data communication but also toward the high-speed data communication terminal to which the next high-speed data communication is planned to be carried out.

When a transmission directivity is generated as explained in Embodiment 1, interference with the high-speed data communication terminal from signals sent from the base station apparatus to other communication terminals is reduced only when a high-speed data communication is performed. That is, interference with the high-speed data communication terminal from signals sent from the base station apparatus to other communication terminals is not reduced before a high-speed data communication is performed.

On the other hand, the adaptive modulation system used for the transmission signal of the high-speed data communication terminal is determined before execution of high-speed data communication based on the channel quality (reception quality) of the high-speed data communication terminal.

Therefore, a adaptive modulation system (e.g., 16QAM) with poorer transmission efficiency than a adaptive modulation system (e.g., 64QAM) which is available when a high-speed data communication is actually performed may be used. As a result, the high-speed data communication terminal cannot perform high-speed data communication efficiently.

Thus, the embodiment generates transmission directivities of general communication terminals in such a way that a null point is directed not only toward a communication terminal actually carrying out high-speed data communication but also toward the high-speed data communication terminal to which the next high-speed data communication is planned to be carried out. It is possible to obtain the information on the high-speed data communication terminal to which the next high-speed data communication is planned to be carried out from a higher layer or, when decided independently in the current layer, from a place determined within the layer.

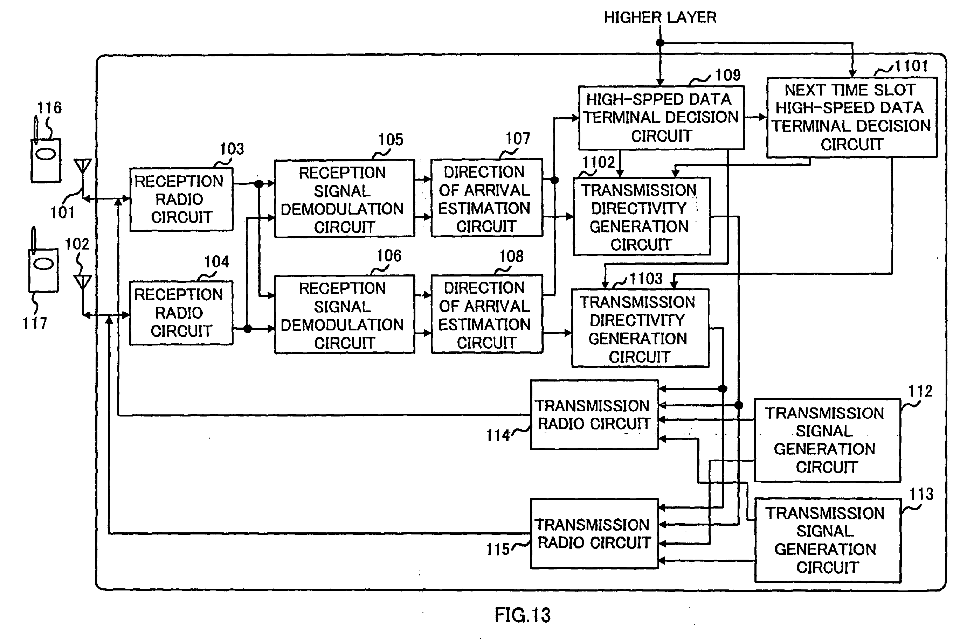

The array antenna base station apparatus according to this embodiment will be explained with reference to FIG.13. FIG. 13 is a block diagram showing a configuration of the array antenna base station apparatus according to Embodiment 6 of the present invention. The same components in FIG.13 as those of Embodiment 1 (FIG.1) are assigned the same reference numerals as those in FIG. 1 and detailed explanations thereof are omitted.

In FIG.13, next time slot high-speed data terminal decision circuit 1101 decides a communication terminal to which a high-speed data communication is carried out in the next time slot (after the high-speed data communication terminal that is currently carrying out a high-speed data communication) based on information on high-speed data communication terminals from a higher layer and sends the decision result to transmission directivity generation circuit 1102 and transmission directivity generation circuit 1103. Furthermore, when high-speed data terminal direction determining circuit 109 independently decides a high-speed data terminal, suppose the information of the communication terminal to which a high-speed data communication will be carried out in the next time slot is obtained from high-speed data terminal direction determining circuit 109.

Transmission directivity generation circuit 1102 and transmission directivity generation circuit 1103 have the same configurations as those of transmission directivity generation circuit 110 and transmission directivity generation circuit 111 respectively explained in Embodiment 1 except the following points.

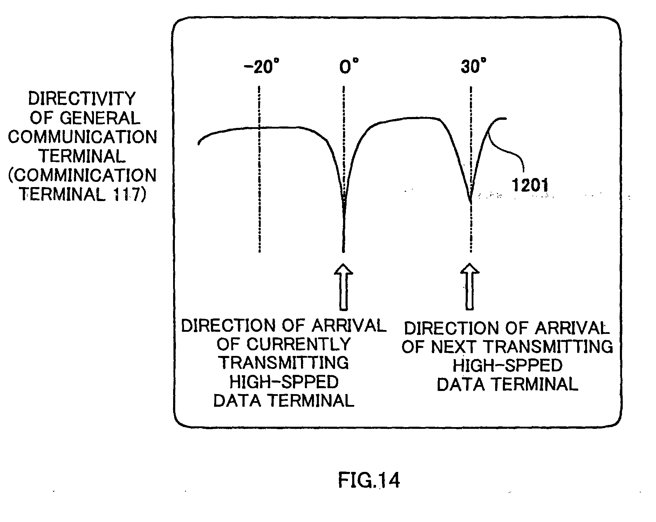

When special transmission directivities are generated, transmission directivity generation circuit 1102 and transmission directivity generation circuit 1103 generate transmission directivities for a general communication terminal as shown in FIG.14. FIG.14 is a schematic view showing an example of transmission directivity of a general communication terminal generated by the transmission directivity generation circuit in the array antenna base station apparatus according to Embodiment 6 of the present invention.

As shown in FIG.14, transmission directivity 1201 for a general communication terminal is generated in such a way that a null point is directed not only toward the communication terminal (here, communication terminal 116) which is actually performing a high-speed data communication but also the high-speed data communication terminal to which a high-speed data communication is planned to be carried out next time (in the next time slot). This embodiment has described the case where a transmission directivity is generated for every time slot, but the time of one time slot can be changed as appropriate.

As shown above, in this embodiment, transmission directivities of general communication terminals are generated in such a way that a null point is directed not only toward a communication terminal actually carrying out a high-speed data communication but also toward the high-speed data communication terminal to which a high-speed data communication is planned to be carried out next. In this way, the adaptive modulation system used for a transmission signal of a high-speed data communication terminal is set based on the channel quality at the high-speed data communication terminal when interference from signals sent from the base station apparatus to other communication terminals is reduced. Therefore, it is possible to reduce the likelihood that a adaptive modulation system with lower transmission efficiency (e.g., 16QAM) will be used when a high-speed data communication is actually performed instead of a adaptive modulation system (e.g., 64QAM) which is available. As a result, the high-speed data communication terminal can perform high-speed data communication efficiently.

### (Embodiment 7)

This embodiment will describe a case where the order of communication terminals to perform high-speed data communications is changed based on the direction of arrival (location) of each communication terminal.

As explained in Embodiment 6 above, when a transmission directivity is generated as explained in Embodiment 1, the amount of interference with the high-speed data communication terminal from signals sent from the base station apparatus to other communication terminals may change drastically.

Thus, in this embodiment, the range covered by the base station apparatus (sectors and cells) is divided into a plurality of groups and communication terminals that should belong to each group are determined based on their directions of arrival (locations). After this, communication terminals that belong to a same group are allowed to consecutively perform high-speed data communications one by one. In the case where the base station apparatus determines priority order of communication terminals to perform high-speed data communication (scheduling), it is possible to change this priority order as appropriate so that the above-described communication terminals that belong to a same group perform high-speed data communications.

As shown above, during a high-speed data communication while communication terminals that belong to a same group are performing high-speed data communications, the amount of interference that all communication terminals that belong to this group receive hardly changes as long as these communication terminals that belong to this group are performing high-speed data communications.

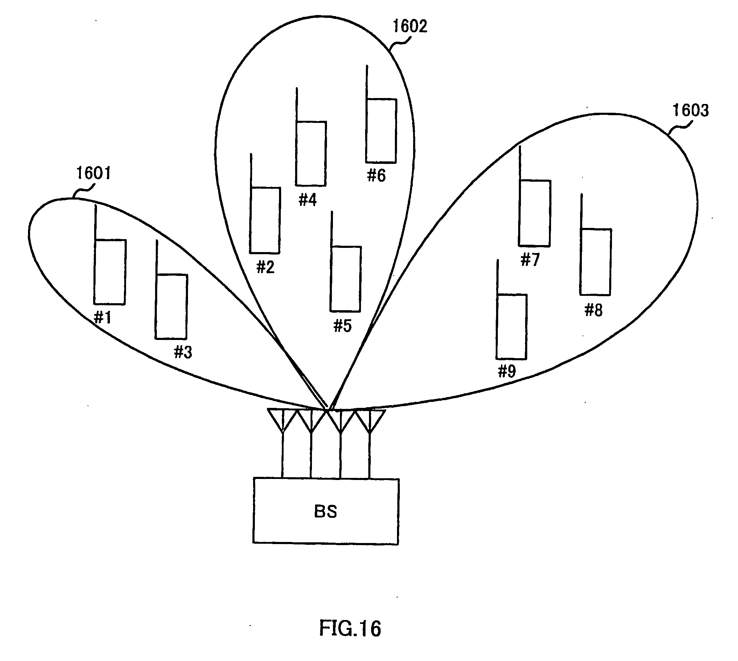

A specific example will be explained with reference to FIG.16. That is, for example, suppose that the range covered by the base station apparatus is divided into three groups; group A1601 to group C1603, and communication terminal 1 and communication terminal 3 belong to group A1601, communication terminal 2 and communication terminals 4 to 6 belong to group B1602 and communication terminals 7 to 9 belong to group C1603. In this case, communication terminal 1 and communication terminal 3 that belong to group A1601 are allowed to perform high-speed data communications sequentially, communication terminals 7 to 9 that belong to group C1603 are allowed to perform high-speed data communications sequentially, and then communication terminal 2 and communication terminals 4 to 6 that belong to group B1602 are allowed to perform high-speed data communications sequentially. The group from which high-speed data communications should be started can be determined according to scheduling based on the channel quality, etc.

In this example, while communication terminals that belong to group A1601 are carrying out high-speed data communications, the amount of interference that communication terminal 1 and communication terminal 3 receive hardly changes. Likewise, while communication terminals that belong to group B1602 are carrying out high-speed data communications, the amount of interference that communication terminal 2 and communication terminals 4 to 6 receive hardly changes.

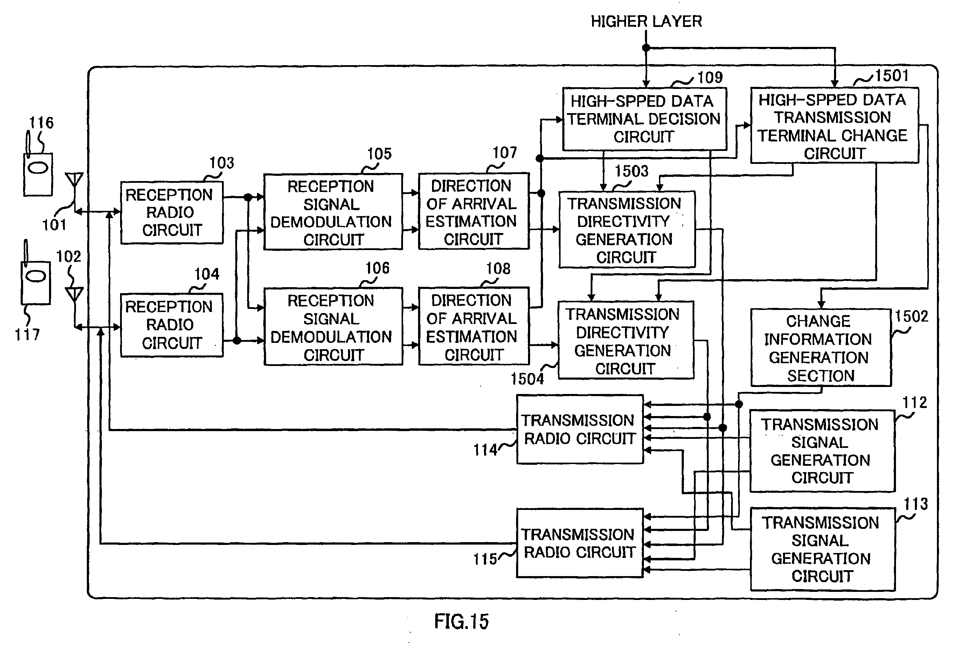

The array antenna base station apparatus according to this embodiment will be explained with reference to FIG.15. FIG. 15 is a block diagram showing a configuration of the array antenna base station apparatus according to Embodiment 7 of the present invention. The same components in FIG.15 as those of Embodiment 1 (FIG.1) are assigned the same reference numerals as those in FIG.1 and detailed explanations thereof are omitted.

In FIG.15, high-speed data transmission terminal change circuit 1501 carries out the following processing using information on communication terminals carrying out high-speed data communications from the higher layer and information on the directions of arrival from direction of arrival estimation circuit 107 and direction of arrival estimation circuit 108. That is, as shown in FIG.16, high-speed data transmission terminal change circuit 1501 divides the range covered by this base station apparatus into a plurality of groups first and determines communication terminals that should belong to each group based on the directions of arrival. Furthermore, high-speed data transmission terminal change circuit 1501 determines the order of communication terminals that carry out high-speed data communications in such a way that communication terminals which belong to a same group carry out high-speed data communications sequentially. After this, high-speed data transmission terminal change circuit 1501 sends the information on the determined order to change information generation section 1502, transmission directivity generation circuit 1503 and transmission directivity generation circuit 1504.

Transmission directivity generation circuit 1503 and transmission directivity generation circuit 1504 are the same as transmission directivity generation circuit 110 and transmission directivity generation circuit 111 in Embodiment 1 except the following points. That is, transmission directivity generation circuit 1503 and transmission directivity generation circuit 1504 recognize whether the communication terminal for which a transmission directivity is generated is a high-speed data communication terminal or a general communication terminal based on the information on the order from high-speed data transmission terminal change circuit 1501 and generates transmission directivities.

Change information generation section 1502 generates information on the order from high-speed data transmission terminal change circuit 1501 as a transmission signal and sends the generated transmission signal to transmission radio circuit 114 and transmission radio circuit 115. The transmission signal generated here is sent by transmission radio circuit 114 and transmission radio circuit 115.

Thus, this embodiment divides the range covered by the base station apparatus into a plurality of groups, determines communication terminals that should belong to each group based on the directions of arrival and then allows communication terminals that belong to a same group to consecutively perform high-speed data communications one by one. Thus, while communication terminals that belong to a same group are carrying out high-speed data communications, the amount of interference that all communication terminals that belong to this group receive hardly changes as long as any of the communication terminals that belong to this group is carrying out a high-speed data communication. Therefore, it is possible to suppress a phenomenon that the amount of interference that high-speed data communication terminals receive changes drastically.

### (Embodiment 8)

This embodiment will describe a case where the order of communication terminals to carry out high-speed data communications is changed based on the channel quality notified from each communication terminal.

In Embodiment 7, the order of communication terminals to carry out high-speed data communications is changed based on results of direction of arrival estimation on the communication terminals carried out by the base station. In this embodiment, the order of communication terminals to carry out high-speed data communications is changed based on the channel quality decided by a communication terminal in Embodiment 7.

In general, communication terminals report their current channel quality to the base station apparatus and the base station apparatus carries out scheduling of these communication terminals to carry out high-speed data communications using the reported result.

However, when a transmission directivity is generated as explained in Embodiment 1, if the example (FIG.16) in Embodiment 7 is used, at a point in time at which communication terminal 1 that belong to group A1601 carries out a high-speed data communication, not only the channel condition of communication terminal 1 but also the channel condition of communication terminal 3 improve drastically. Thus, when such a drastic improvement in the channel condition takes place, suppose the communication terminal reports the improvement to the base station apparatus separately.

The base station apparatus allows the communication terminal whose channel condition has improved drastically to carry out a high-speed data communication with higher priority. This makes it possible to construct an efficient data communication environment.

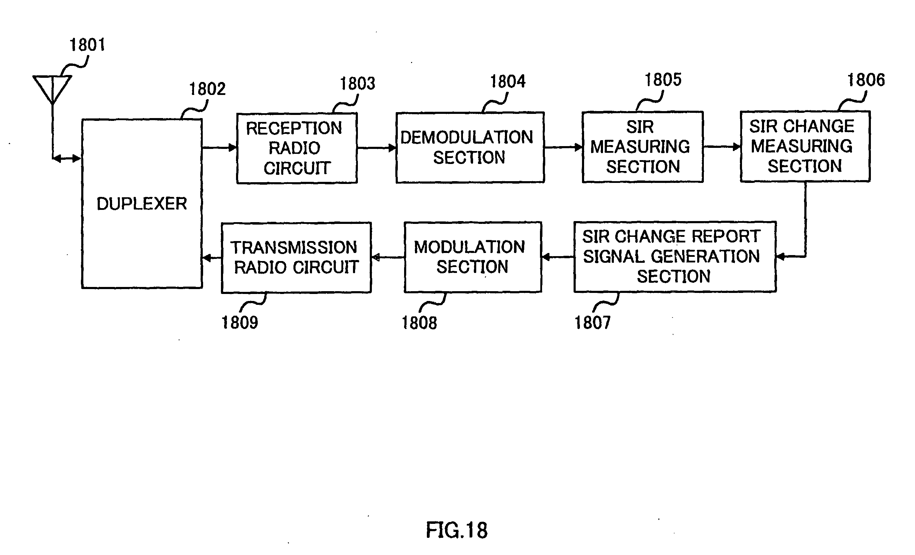

The array antenna base station apparatus according to this embodiment and a communication terminal that carries out a radio communication with this base station apparatus will be explained below. First, the above-described communication terminal will be explained with reference to FIG.18. FIG.18 is a block diagram showing a configuration of a communication terminal apparatus carrying out a radio communication with the array antenna base station apparatus according to Embodiment 8 of the present invention.

In FIG.18, duplexer 1802 sends a signal received by antenna 1801 (reception signal) to reception radio circuit 1803 and sends a transmission signal from transmission radio circuit 1809, which will be described later, via antenna 1801.

Reception radio circuit 1803 converts the reception signal to a baseband signal and sends the baseband signal to demodulation section 1804. Demodulation section 1804 carries out demodulation processing on the reception signal, which has been converted to the baseband signal and thereby generates a demodulated signal.

SIR measuring section 1805 measures the reception quality (e.g., SIR) of the demodulated signal generated. SIR change measuring section 1806 monitors the reception quality measured by SIR measuring section 1805 and detects any large change in the reception quality (drastic improvement of the reception quality, etc.).

When a large change in the reception quality is detected, SIR change report signal generation section 1807 generates a signal to report the change to the base station apparatus (hereinafter referred to as "report signal"). Modulation section 1808 generates a baseband signal by carrying out modulation processing such as spreading processing on normal transmission data and the report signal as well. Transmission radio circuit 1809 converts the generated baseband signal to an RF-band transmission signal and sends the converted signal to duplexer 1802.

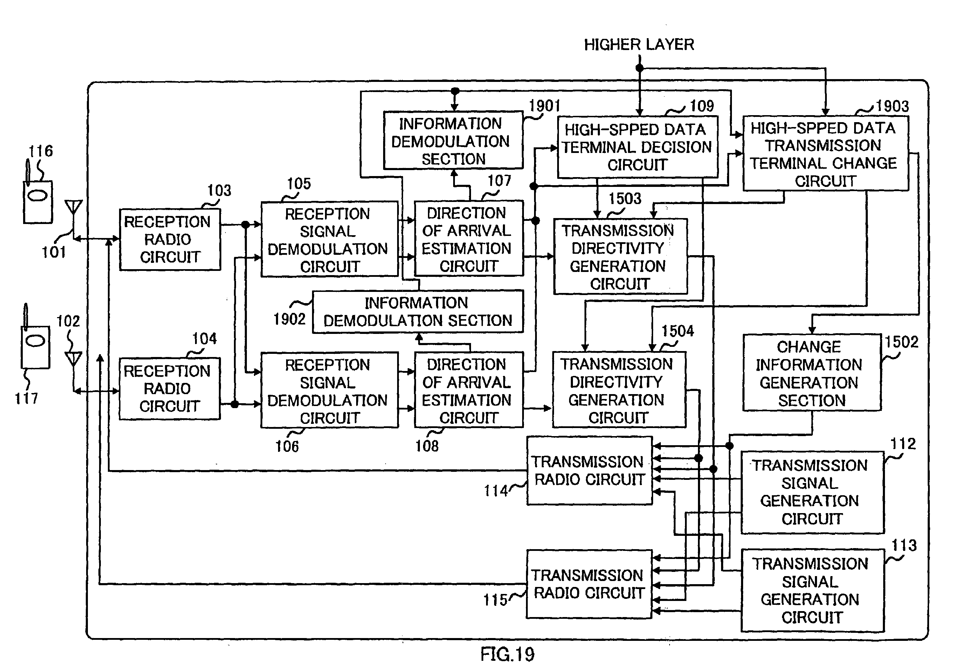

Then, the array antenna base station apparatus according to this embodiment will be explained with reference to FIG.19. FIG.19 is a block diagram showing a configuration of the array antenna base station apparatus according to Embodiment 8 of the present invention. The same components in FIG.15 as those of Embodiment 7 (FIG.15) are assigned the same reference numerals as those in FIG.15 and detailed explanations thereof are omitted.

In FIG.19, information demodulation section 1901 and information demodulation section 1902 extract the report signals from the demodulated signals sent via direction of arrival estimation circuit 107 and direction of arrival estimation circuit 108 and send the extracted report signals to high-speed data transmission terminal change circuit 1903.

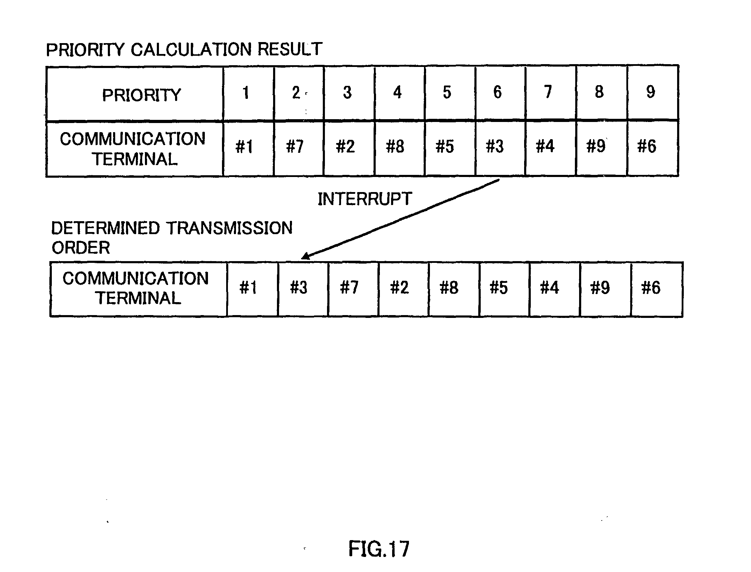

High-speed data transmission terminal change circuit 1903 is the same as high-speed data transmission terminal change circuit 1501 in Embodiment 7 except the following points. That is, high-speed data transmission terminal change circuit 1903 decides the priority order (carries out scheduling) of communication terminals to perform high-speed data communications based on the channel quality first as usual. Here, suppose the scheduling result is as the one shown in FIG.17. Communication terminal 1 (that is, #1) to communication terminal 9 (that is, #9) in FIG.17 are located as shown in FIG.16.

Furthermore, high-speed data transmission terminal change circuit 1903 recognizes the communication terminal whose channel quality has changed drastically (here, the communication terminal whose channel quality has improved drastically) based on the report signal from information demodulation section 1901 and from information demodulation section 1902. After this, high-speed data transmission terminal change circuit 1903 raises the priority order of the communication terminal whose channel quality has changed drastically. That is, for example, when the channel quality of communication terminal 3 improves drastically, a report signal indicating that improvement is sent from communication terminal 3, and therefore the priority order of communication terminal 3 is changed from "6" which was determined by normal scheduling to "2".

As a result, changing the priority order in this way is equivalent to consecutively executing high-speed data communications to communication terminals that belong to the same group as explained in Embodiment 7. That is, according to FIG.16, while communication terminal 1 is performing a high-speed data communication, the channel quality of communication terminal 3 improves drastically, and therefore the priority order of communication terminal 3 is raised. That is, communication terminal 1 and communication terminal 3 that belong to same group A1601 consecutively carry out high-speed data communications. Likewise, while communication terminal 2 is performing a high-speed data communication, the channel qualities of communication terminal 4 to communication terminal 6 improve drastically, and therefore the priority orders of communication terminal 4 to communication terminal 6 are raised. That is, communication terminal 2 to communication terminal 6 that belong to same group B1602 consecutively carry out high-speed data communications.

Furthermore, high-speed data transmission terminal change circuit 1903 sends the changed order to change information generation section 1502, transmission directivity generation circuit 1503 and transmission directivity generation circuit 1504 as in the case of Embodiment 7.

As described above, this embodiment has described the case where a communication terminal reports the base station apparatus that its channel quality has improved drastically and the base station apparatus raises the priority order of this communication terminal, but it is also possible for the communication terminal to inform the base station apparatus that its channel quality has deteriorated drastically and the base station apparatus to lower the priority order of this communication terminal. By doing so, the priority order of the communication terminal with extremely high channel quality is raised accordingly, and it is thereby possible to allow communication terminals that belong to the same group to consecutively perform high-speed data communications

Thus, this embodiment allows a communication terminal whose channel quality has changed drastically to report on the change of the channel quality and recognizes a drastic change of channel quality in each communication terminal using the result of this report. Furthermore, this embodiment changes the priority order of communication terminals to carry out high-speed data communications based on a drastic change in the channel quality in each recognized communication terminal. Thus, while communication terminals that belong to a same group are carrying out high-speed data communications, the amount of interference that all communication terminals that belong to this group receive hardly changes as long as any communication terminal that belongs to this group is carrying out a high-speed data communication. Therefore, it is possible to suppress a phenomenon that the amount of interference that high-speed data communication terminals receive changes a great deal.

### (Embodiment 9)

This embodiment will describe a case where the width of a null to be directed toward a high-speed data communication terminal in transmission directivities of general communication terminals is changed according to the accuracy of direction of arrival estimation of the high-speed data communication terminal.

When transmission directivities of general communication terminals are generated as explained in Embodiment 1, in the case where the direction of arrival of the high-speed data communication terminal is controlled with high accuracy, it is possible to suppress interference with the high-speed data communication terminal even if a sharp null (null with a narrow width) is directed in the direction of arrival of the high-speed data communication terminal.

However, in the case where the direction of arrival of the high-speed data communication terminal is not controlled with high accuracy, unless a null of a certain width is directed in the direction of arrival of the high-speed data communication terminal, the position of the null may be deviated from the actual direction of arrival of the high-speed data communication terminal. In this case, it is impossible to sufficiently suppress interference with the high-speed data communication terminal.

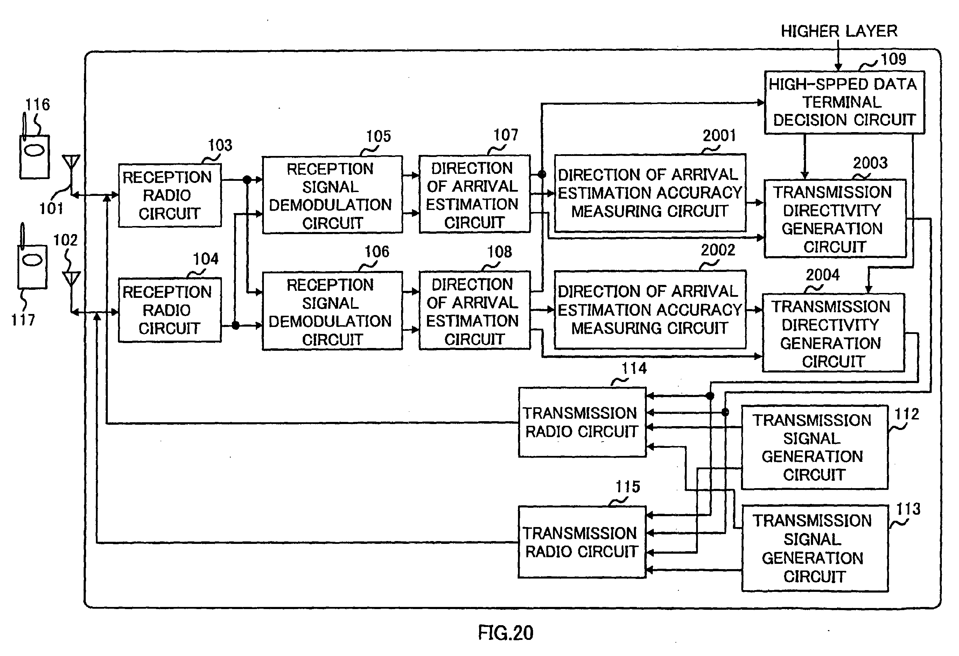

Thus, this embodiment changes the width of the null to be directed in the direction of arrival of the high-speed data communication terminal according to the accuracy of direction of arrival estimation of the high-speed data communication terminal. The array antenna base station apparatus according to this embodiment will be explained with reference to FIG.20. FIG.20 is a block diagram showing a configuration of the array antenna base station apparatus according to Embodiment 9 of the present invention. The same components in FIG.20 as those of Embodiment 1 (FIG.1) are assigned the same reference numerals as those in FIG.1 and detailed explanations thereof are omitted.

In FIG.20, direction of arrival estimation accuracy measuring circuit 2001 and direction of arrival estimation accuracy measuring circuit 2002 measure the accuracy of the directions of arrival estimated by direction of arrival estimation circuit 107 and direction of arrival estimation circuit 108 respectively.

There are methods of measuring the accuracy of directions of arrival at direction of arrival estimation accuracy measuring circuit 2001 and direction of arrival estimation accuracy measuring circuit 2002 as follows, for example. First, it is possible to measure the quality (e.g., SIR) of the demodulated signal obtained from reception signal demodulation circuit 105 or reception signal demodulation circuit 106 and recognize the accuracy of estimated directions of arrival based on the measured quality of the demodulated signal. More specifically, in the case of a communication terminal whose demodulated signal has good (poor) reception quality, it is possible to recognize that the accuracy of direction of arrival estimation is high (low).

Second, a Doppler frequency is detected using the reception signal and the moving situation of each communication terminal is estimated and in the case of a communication terminal whose result of direction of arrival estimation is not changing (is changing) from among the communication terminals with less movement, it is possible to recognize that the accuracy of direction of arrival estimation is high (low). It is also possible to measure the accuracy of directions of arrival estimation using a method other than the above-described methods.

Furthermore, direction of arrival estimation accuracy measuring circuit 2001 and direction of arrival estimation accuracy measuring circuit 2002 compare the measured accuracy of directions of arrival estimation with a threshold and sends the comparison result to transmission directivity generation circuit 2003 and transmission directivity generation circuit 2004.

Transmission directivity generation circuit 2003 and transmission directivity generation circuit 2004 are similar to transmission directivity generation circuit 110 and transmission directivity generation circuit 111 in Embodiment 1 except the following points. That is, transmission directivity generation circuit 2003 and transmission directivity generation circuit 2004 generate transmission directivities based on the comparison results of direction of arrival estimation accuracy measuring circuit 2001 and direction of arrival estimation accuracy measuring circuit 2002.

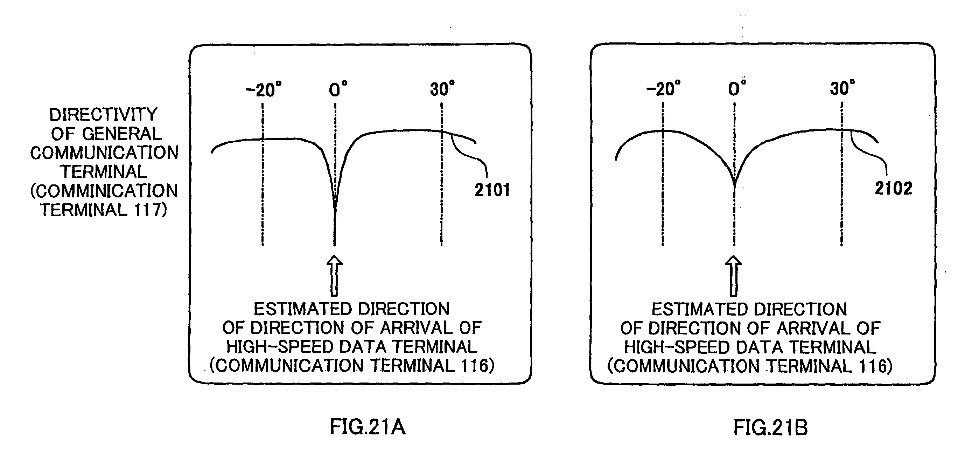

More specifically, when a comparison result indicating that the accuracy of direction of arrival estimation of a high-speed data communication terminal exceeds a threshold is received, (that is, the accuracy of direction of arrival estimation is high), transmission directivity generation circuit 2003 and transmission directivity generation circuit 2004 generate transmission directivity 2101 of a general communication terminal in such a way that a narrow null point is directed in the direction of arrival of the high-speed data communication terminal (estimated direction of arrival) as shown in FIG.21A.

On the contrary, when a comparison result indicating that the accuracy of direction of arrival estimation of the high-speed data communication terminal is equal to or lower than the threshold is received, (that is, the accuracy of direction of arrival estimation is low), transmission directivity generation circuit 2003 and transmission directivity generation circuit 2004 generate transmission directivity 2102 of the general communication terminal in such a way that a wide null point is directed in the direction of arrival of the high-speed data communication terminal (estimated direction of arrival) as shown in FIG.21B. The width of a null to be changed according to the accuracy of direction of arrival estimation can be set as appropriate according to various conditions such as the accuracy of direction of arrival estimation.

Thus, transmission directivity generation circuit 2003 and transmission directivity generation circuit 2004 generate transmission directivities of a general communication terminal by changing the width of a null to be directed to a high-speed data communication terminal according to the accuracy of direction of arrival estimation of the high-speed data communication terminal. This makes it possible to suppress interference that the high-speed data communication terminal receives from signals sent to the general communication terminal even if the accuracy of direction of arrival estimation of the high-speed data communication terminal is low. For example, according to FIG.21B, in the case where the estimated direction of arrival of the high-speed data communication terminal is deviated from the actual direction of arrival of the high-speed data communication terminal (e.g., the actual direction of arrival of the high-speed data communication terminal is not "0°" in the figure but "-2°"), transmission directivities of a general communication terminal are generated in such a way that a wide null is directed in the direction of arrival of the high-speed data communication terminal. Therefore, the power value in the "-2°" direction in the transmission signal of the general communication terminal is almost null, thus suppressing the amount of interference at the high-speed data communication terminal.

Thus, this embodiment changes the width of a null to be directed toward the high-speed data communication terminal in transmission directivities of a general communication terminal, thus making it possible to suppress the amount of interference at the high-speed data communication terminal regardless of the accuracy of direction of arrival estimation of the high-speed data communication terminal.

### (Embodiment 10)

This embodiment will describe a case where the amount of processing in generation of transmission directivities is reduced.

In Embodiment 1, it may be difficult to generate such transmission directivities that a null is directed in the direction of arrival of a high-speed data communication terminal for all general communication terminals from the standpoint of the amount of processing.

Therefore, this embodiment generates transmission directivities in such a way that a null is directed in the direction of arrival of a high-speed data communication terminal for only those general communication terminals whose transmission signals may cause much interference with the high-speed data communication terminal (hereinafter referred to as "specific communication terminals") of all general communication terminals. The specific communication terminals correspond to communication terminals whose transmission signals have high power.

A first example of the specific communication terminals is a communication terminal located away from the base station apparatus. This base station apparatus necessarily performs transmission to such a communication terminal with high transmit power, which causes the amount of interference at the high-speed data communication terminal to increase.

A second example of the specific communication terminals is a communication terminal, which is communicating with the base station apparatus in a poor condition. When closed-loop transmit power control is used, this base station apparatus receives a request from such a communication terminal that transmit power should be increased, and therefore the base station apparatus performs transmission to such a communication terminal with high transmit power. When open-loop transmit power control is used, the reception quality of the signal sent from such a communication terminal deteriorates, and therefore the base station apparatus performs transmission to this communication terminal with high transmit power, which causes the amount of interference at the high-speed data communication terminal to increase.

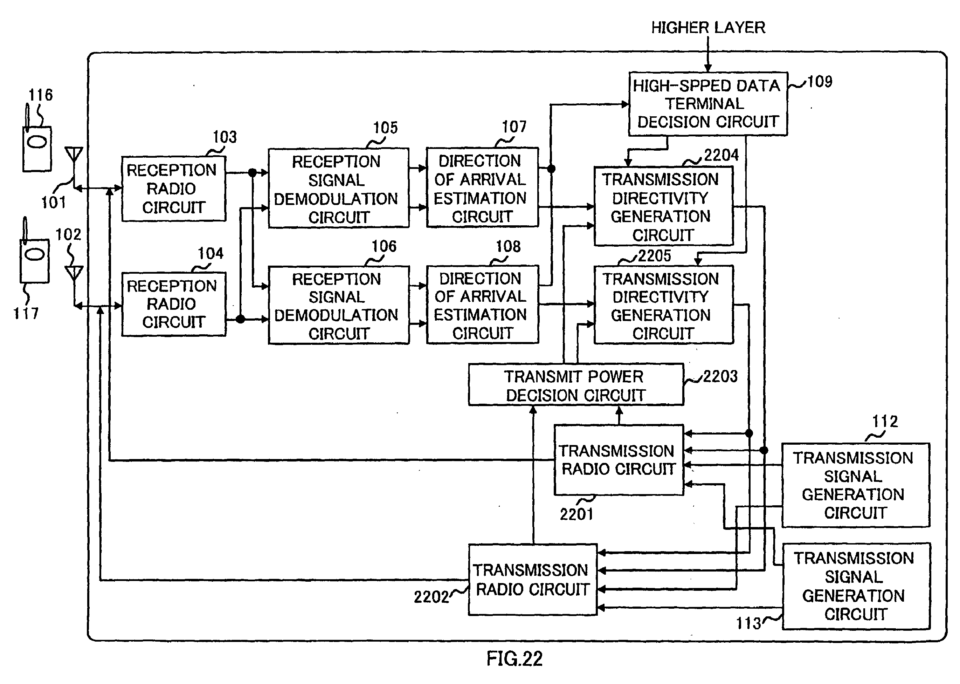

The array antenna base station apparatus according to this embodiment will be explained with reference to FIG.22. FIG. 22 is a block diagram showing a configuration of the array antenna base station apparatus according to Embodiment 10 of the present invention. The same components in FIG.22 as those of Embodiment 1 (FIG.1) are assigned the same reference numerals as those in FIG. 1 and detailed explanations thereof are omitted.

Transmission radio circuit 2201 and transmission radio circuit 2202 send the transmission signals of communication terminal 116 and communication terminal 117 to transmit power decision circuit 2203 respectively.

Transmit power decision circuit 2203 selects a communication terminal with high transmit power from all communication terminals using the transmit power from transmission radio circuit 2201 and transmission radio circuit 2202. There are selection methods as shown below.

First, it is possible to rank all communication terminals according to the magnitude of transmit power and select a predetermined total number of communication terminals in descending order as specific communication terminals. Second, it is also possible to provide a threshold with respect to transmit power and select communication terminals whose transmit power exceeds this threshold as specific communication terminals. Third, it is also possible to use a method combining the above-described first method and second method. It goes without saying that it is also possible to use methods other than the above-described first to third methods as the selection method.

This transmit power decision circuit 2203 sends the selection result to transmission directivity generation circuit 2204 and transmission directivity generation circuit 2205. Transmission directivity generation circuit 2204 and transmission directivity generation circuit 2205 are similar to transmission directivity generation circuit 110 and transmission directivity generation circuit 111 in Embodiment 1 except the following points. That is, transmission directivity generation circuit 2204 and transmission directivity generation circuit 2205 generate the transmission directivities as explained in Embodiment 1 (such transmission directivities that direct a null point in the direction of arrival of a high-speed data communication terminal) based on the selection result from transmit power decision circuit 2203 only when the communication terminal for which transmission directivity is generated is a specific communication terminal.

As shown above, this embodiment generates such transmission directivities that direct a null in the direction of arrival of the high-speed data communication terminal only for specific communication terminals whose transmission signals may cause much interference with the high-speed data communication terminal of all general communication terminals. Thus, even if it is difficult, from the standpoint of the amount of processing in generation of transmission directivities, to generate such transmission directivities that direct a null in the direction of arrival of the high-speed data communication terminal for all communication terminals, it is possible to suppress the amount of interference at the high-speed data communication terminal while reducing the amount of processing in generation of transmission directivities.

### (Embodiment 11)

As in the case of Embodiment 10, this embodiment will describe a case where the amount of processing in generation of transmission directivities is reduced.

In Embodiment 2 as in the case of Embodiment 1, it may be difficult from the standpoint of the amount of processingto generate transmission directivities in such a way that a null is directed in the direction of arrival of a high-speed data communication terminal for all general communication terminals.

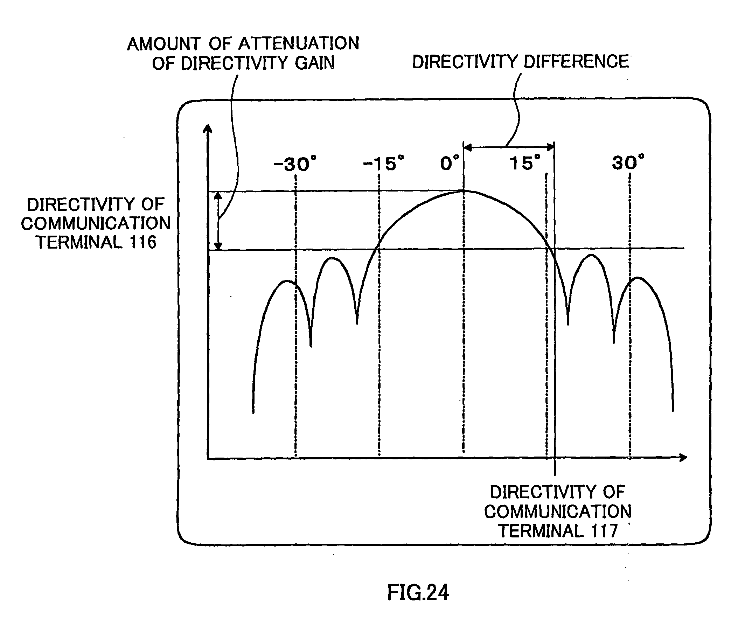

On the other hand, in the case of general communication terminals whose direction of arrival is away from the direction of arrival of the high-speed data communication terminal, the amount of interference that the transmit power thereof causes on the high-speed data communication terminal is small. More specifically, according to FIG.24, when the difference between the direction of arrival of the general communication terminal (here communication terminal 116) and the direction of arrival of the high-speed data communication terminal (here, communication terminal 117) is large, the power of the component of the direction of arrival of the high-speed data communication terminal in the transmission signal of the general communication terminal is small. Therefore, the amount of interference that the transmission signal of the general communication terminal causes on the high-speed data communication terminal is small. On the contrary, when the difference between the direction of arrival of the general communication terminal and the direction of arrival of the high-speed data communication terminal is small, the power of the component of the direction of arrival of the high-speed data communication terminal in the transmission signal of the general communication terminal is large. Therefore, the amount of interference that the transmission power of the general communication terminal causes on the high-speed data communication terminal is large. Thus, using the difference in the direction of arrival between the general communication terminal and high-speed data communication terminal, it is possible to decide the magnitude of the amount of interference that transmission data of the general communication terminal causes on the high-speed data communication terminal.

Thus, this embodiment does not shift transmission directivities as explained in Embodiment 2 for the general communication terminal whose direction of arrival is away from the direction of arrival of the high-speed data communication terminal. That is, of all general communication terminals, this embodiment shifts transmission directivities as explained in Embodiment 2 for only the general communication terminal whose direction of arrival is close to the direction of arrival of the high-speed data communication terminal. This makes it possible to reduce the amount of processing in generation of transmission directivities.

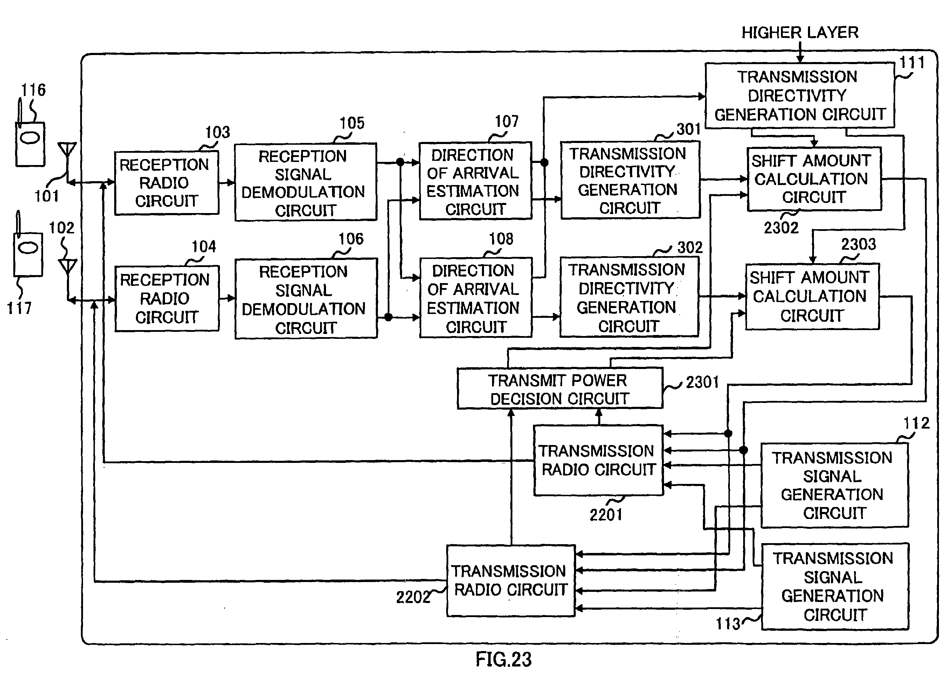

The array antenna base station apparatus according to this embodiment will be explained with reference to FIG.23. FIG.23 is a block diagram showing a configuration of the array antenna base station apparatus according to Embodiment 11 of the present invention. The same components in FIG.23 as those of Embodiment 2 (FIG.3) and Embodiment 10 (FIG.22) are assigned the same reference numerals as those in FIG.3 and FIG.22 and detailed explanations thereof are omitted. In this embodiment, suppose communication terminal 116 is a general communication terminal and communication terminal 117 is a high-speed data communication terminal as an example.

In FIG.23, transmit power decision circuit 2301 calculates a difference in transmit power between communication terminal 116 and communication terminal 117 using the transmit power from transmission radio circuit 2201 and transmission radio circuit 2202 and sends the calculated difference to shift amount calculation circuit 2302 and shift amount calculation circuit 2303.

Shift amount calculation circuit 2302 and shift amount calculation circuit 2303 are similar to shift amount calculation circuit 303 and shift amount calculation circuit 304 in Embodiment 3 except the following points.

That is, when the communication terminal which is the shift target (that is communication terminal 116 or communication terminal 117) is a general communication terminal, shift amount calculation circuit 2302 and shift amount calculation circuit 2303 measure a difference between the direction of arrival of this communication terminal which is the shift target and the direction of arrival of the high-speed data communication terminal.

Furthermore, shift amount calculation circuit 2302 and shift amount calculation circuit 2303 calculate the difference in the direction of arrival between communication terminal 116 (general communication terminal) and communication terminal (high-speed data communication terminal) more accurately using the measured difference and the power difference from transmit power decision circuit 2301. More specifically, when the difference between the transmit power of the general communication terminal and the transmit power of the high-speed data communication terminal is large (small), it is possible to decide that the difference in the direction of arrival between the general communication terminal and the high-speed data communication terminal is large (small). When the difference in the direction of arrival between the general communication terminal and the high-speed data communication terminal is measured, shift amount calculation circuit 2302 and shift amount calculation circuit 2303 may be set not so as not to use the difference in transmit power from transmit power decision circuit 2301.

After this, when the calculated difference exceeds a threshold, shift amount calculation circuit 2302 and shift amount calculation circuit 2303 decide that the influence that the transmission signal of the general communication terminal has on the high-speed data communication terminal is small and do not shift transmission directivities generated by transmission directivity generation circuit 301 and transmission directivity generation circuit 302 respectively. On the contrary, when the calculated difference is equal to or smaller than the threshold, shift amount calculation circuit 2302 and shift amount calculation circuit 2303 decide that the influence that the transmission signal of the general communication terminal has on the high-speed data communication terminal is large and shift transmission directivities generated by transmission directivity generation circuit 301 and transmission directivity generation circuit 302 respectively as in the case of Embodiment 2.

Thus, this embodiment decides that in the case of a general communication terminal whose direction of arrival is away from the direction of arrival of the high-speed data communication terminal of all general communication terminals, the amount of interference that the transmission signal of this general communication terminal has on the high-speed data communication terminal is small and does not shift the transmission directivity generated, and can thereby suppress the amount of interference at the high-speed data communication terminal while reducing the amount of processing in generation of transmission directivities.

On the other hand, radio communications referred to as "high-speed data communication" and "general communication" in the foregoing embodiments can be defined as follows. That is, it is possible to define a communication that transmits information using a speed equal to or greater than a first information transmission speed as a "high-speed data communication" and a communication that transmits information using a speed equal to or smaller than a second information transmission speed as a "general communication". The first information transmission speed and second information transmission speed can be set arbitrarily.

Furthermore, it is possible to combine the array antenna base station apparatuses according to above-described Embodiment 1 to Embodiment 11 with one another as appropriate.

As described above, the present invention generates transmission directivities for a general communication terminal in such a way that a null is directed in the direction of arrival of a high-speed data communication terminal, and can thereby provide an array antenna base station apparatus to carry out high-speed data communications while suppressing interference with communication terminal apparatuses.

This application is based on the Japanese Patent Application No.2000-157477 filed on May 26, 2000 and the Japanese Patent Application No.2000-183668 filed on June 19, 2000, entire content of which is expressly incorporated by reference herein.

### Industrial Applicability

The present invention is applicable to a mobile unit communication system.

## Claims

1. An array antenna base station apparatus comprising:
an array antenna made up of a plurality of antenna elements;
a directivity generator that generates transmission directivity of a general communication terminal apparatus that carries out communication at a speed equal to or lower than a second information transmission speed in such a way that a null is directed in the direction of arrival of a signal sent from a high-speed communication terminal apparatus that carries out communication at a speed equal to or greater than a first information transmission speed; and
a transmitter that sends a signal from said array antenna to the general communication terminal apparatus using the generated transmission directivity.

2. The array antenna base station apparatus according to claim 1, said directivity generator comprising:
a directivity candidate generator that generates a transmission directivity candidate for the general communication terminal apparatus in such a way that a beam is directed in the direction of arrival of the signal sent from the general communication terminal apparatus; and
a shifter that shifts the transmission directivity candidate in such a way that the null of the generated transmission directivity candidate almost matches the direction of arrival of the signal sent from the high-speed communication terminal apparatus, wherein the shifted transmission directivity candidate is regarded as the transmission directivity of the general communication terminal apparatus.

3. The array antenna base station apparatus according to claim 2, further comprising a calculator that calculates a difference between the direction of arrival of the signal sent from the general communication terminal apparatus and the direction of arrival of the signal sent from the high-speed communication terminal apparatus, wherein said shifter shifts the transmission directivity candidate only for a general communication terminal apparatus whose calculated difference is equal to or lower than a threshold.

4. The array antenna base station apparatus according to claim 1, wherein said directivity generator generates transmission directivity for the high-speed communication terminal apparatus in association with the number or density of high-speed communication terminal apparatuses and said transmitter sends a signal to the high-speed communication terminal apparatus using the generated transmission directivity.

5. The array antenna base station apparatus according to claim 1, further comprising an interference detector that detects the amount of interference with the high-speed communication terminal apparatus, wherein said transmitter sends a signal to the high-speed communication terminal apparatus using adaptive modulation set in association with the detected amount of interference.

6. The array antenna base station apparatus according to claim 1, further comprising a power estimator that estimates power of the signal sent to the general communication terminal apparatus, in the direction of arrival of the signal sent from the general communication terminal apparatus, using the transmission directivity of the general communication terminal apparatus generated by said directivity generator, wherein said transmitter sends a signal with transmit power which is set in association with the estimated power to the general communication terminal apparatus.

7. The array antenna base station apparatus according to claim 1, wherein said directivity generator generates the transmission directivity of the general communication terminal apparatus in such a way that a null is directed in the direction of arrival of a signal sent from a high-speed communication terminal apparatus to which a communication is planned to be carried out in the next time slot.

8. The array antenna base station apparatus according to claim 1, further comprising a determinator that determines a group to which communication terminal apparatuses belong in association with the directions of arrival of signals sent from the communication terminal apparatuses, wherein said transmitter sends signals at a speed equal to or greater than the first information transmission speed to communication terminal apparatuses that belong to a same group.

9. The array antenna base station apparatus according to claim 1, further comprising a recognizer that recognizes a change in the amount of interference at a communication terminal apparatus, wherein said transmitter sends a signal at a speed equal to or greater than the first information transmission speed to the communication terminal apparatus in association with the recognized change in the amount of interference.

10. The array antenna base station apparatus according to claim 1, wherein said directivity generator changes the width of a null to be directed in the direction of arrival of the signal sent from the high-speed communication terminal apparatus according to the accuracy of estimation of direction of arrival of the signal sent from the high-speed communication terminal apparatus.

11. The array antenna base station apparatus according to claim 1, further comprising an estimator that estimates the amount of interference with the high-speed communication terminal apparatus from the signal to the general communication terminal apparatus, wherein said directivity generator generates transmission directivity in such a way that a null is directed in the direction of arrival of the signal sent from the high-speed communication terminal apparatus for only a general communication terminal apparatus whose estimated amount of interference exceeds a threshold.

12. A radio transmission method comprising:
a directivity generating step of generating transmission directivity of a general communication terminal apparatus that carries out communication at a speed equal to or lower than a second information transmission speed in such a way that a null is directed in the direction of arrival of a signal sent from a high-speed communication terminal apparatus that carries out communication at a speed equal to or greater than a first information transmission speed; and
a transmitting step of transmitting a signal from an array antenna made up of a plurality of antenna elements to the general communication terminal apparatus using the generated transmission directivity.
